(19) Europäisches Patentamt
European Patent Office
Office européen des brevets

(11) **EP 1 564 731 A2**

## (12) EUROPEAN PATENT APPLICATION

(43) Date of publication:
**17.08.2005 Bulletin 2005/33**

(51) Int Cl.$^7$: **G11B 7/135**

(21) Application number: **05250762.1**

(22) Date of filing: **10.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **13.02.2004 JP 2004036832**

(71) Applicant: **Konica Minolta Opto, Inc.**
**Hachioji-shi, Tokyo 192-8505 (JP)**

(72) Inventor: **Mimori, Mitsuru**
**Konica Minolta Opto, Inc.**
**Hachioji-shi Tokyo 192-8505 (JP)**

(74) Representative: **Rees, Alexander Ellison et al**
**Urquhart-Dykes & Lord LLP**
**30 Welbeck Street**
**London W1G 8ER (GB)**

(54) **Optical pickup apparatus and diffractive optical element for optical pickup apparatus**

(57) An optical pickup apparatus, includes: first - third light sources (LD1-LD3) emitting first - third light fluxes respectively; a diffractive optical (L1) and; an objective optical system having a light converging element (L2), wherein the diffractive optical element includes a first area whose center is on an optical axis; a second area formed in a ring-shape and arranged outside of the first area; a third area formed in a ring-shape and arranged outside of the second area; and the first - third areas have different optical properties each other for the first - third light fluxes, the third area does not form two light fluxes among the first - third light fluxes passing the third area and the light converging element into a converged spot on the information recording surfaces of corresponding disks.

FIG. 1

EP 1 564 731 A2

# FIG. 2

**Description**

**FIELD OF THE INVENTION**

The present invention relates to an optical pickup apparatus and a diffractive optical element.

**BACKGROUND OF THE INVENTION**

In recent years, a wavelength of a laser light source used as a light source for reproducing of information recorded on an optical disc and for recording of information on an optical disc has been made shorter in a field of an optical pickup apparatus, and for example, there have been put to practical use laser light sources each having a wavelength of 405 nm such as a violet semiconductor laser and a violet SHG laser that conducts a wavelength conversion of an infrared semiconductor laser by utilizing second harmonic generation.

If these violet light sources are used, when using an objective lens having the same numerical aperture (NA) as in DVD (digital versatile disc), it is possible to record information of 15 - 20 GB for the optical disc with a diameter of 12 cm, and when NA of the objective lens is raised up to 0.85, it is possible to record information of 23 - 25 GB for the optical disc with a diameter of 12 cm. Hereafter, in the present specification, optical discs and magneto-optical discs employing the violet laser light source are generically called "a high density optical disc".

Incidentally, only a capability to conduct recording and reproducing of information properly for the high density optical disc of this kind is not enough as a value of a product of an optical disc player and recorder. When considering a reality that DVD and CD (compact disc) in which various kinds of information are recorded are on the market presently, a capability to conduct recording and reproducing of information for the high density optical disc alone is not enough, and another capability to conduct recording and reproducing of information properly in the same way even for DVD and CD owned by a user leads to an enhancement of commercial values as an optical disc player and recorder. From this background, it is desired that an optical pickup apparatus incorporated in an optical disc player and recorder for high density discs has a capability to conduct recording and reproducing of information properly, while keeping compatibility for any of a high density optical disc, DVD and CD.

Since a numerical aperture necessary for recording and reproducing of information is established on each optical disc, it is necessary to provide an aperture regulating means for obtaining a desired numerical aperture, for giving compatibility to the optical pickup apparatus.

As the aperture regulating means, there are known, for example, a method to intercept a ray of light mechanically by using a diaphragm, a method to use a dichroic filter having a wavelength selectivity concerning the transmittance of the ray of light, a method to use a phase control element based on a liquid crystal and a method to combine the foregoing (for example, see Patent Document 1)

Patent Document 1 discloses an optical pickup apparatus that is provided separately with an optical element wherein a hologram is formed on an area (central area) that is in a form of concentric circles each having its center on an optical axis, and a diffraction grating is formed on a circumference of the central area (peripheral area) and with an objective lens of a refraction type.

In this device, a light flux with wavelength 635 nm for DVD is transmitted and a light flux with wavelength 780 nm for CD is diffracted in the central area, while, a light flux with wavelength 635 nm is transmitted and a light flux with wavelength 780 nm is substantially intercepted through diffraction in the peripheral area. By making the light flux with wavelength 635 nm to enter the objective lens totally, and by making the light flux with wavelength 780 nm to enter the objective lens by making only the light flux transmitted through the central area to be diffracted to be diverged, as stated above, recording and reproducing of information can be conducted by one objective lens for two types of optical discs including DVD and CD.

(Patent Document 1)

International Publication No. 98/19303 Pamphlet

However, the device disclosed by Patent Document 1 is one wherein a light flux among two types light fluxes each having a different wavelength is diffracted by a hologram optical element, and another light flux is transmitted and is converged on an optical disc through the objective lens.

Therefore, for realizing compatibility for three types of optical discs including a high density optical disc, DVD and CD, a wavelength (near 780 nm) of a light flux used for recording and reproducing for CD is about twice a wavelength (near 400 nm) of a light flux used for recording and reproducing for the high density optical disc, thus, it is difficult to design a diffractive structure capable of giving an optimum diffracting actions to both the light flux for the high density optical disc and the light flux for CD, which is a problem. Due to the necessity to solve the aforementioned problems, it is difficult to use the technology disclosed in the aforesaid Patent Document as it is as a technology to realize compatibility for three types of optical discs.

Further, even in the case of using the dichroic filter, it is difficult to form a thin layer that can regulate an aperture properly for three types of light fluxes each having a different wavelength, and the cost is increased, which is a problem.

**SUMMARY OF THE INVENTION**

Taking the aforementioned problems into consideration, an object of the invention is to provide an optical pickup apparatus equipped with an optical element that can regulate a aperture properly for three types of discs including a high density optical disc employing a violet laser light source, DVD and CD.

To solve the problems stated above; optical pickup apparatus PU1 relating to the invention is provided with a diffractive optical element arranged in the common optical path for the first - third light fluxes, an optical surface of the diffractive optical element is divided into first - third areas, and the second area and the third area are provided respectively with the first diffractive structure and the second diffractive structure. Each of the first - third light fluxes having passed through the first area forms a converged spot on an information recording surface of each prescribed optical disc, the first light source and the second light source having passed through the second area also form converged spots respectively, and the third light flux having passed the second area does not form a converged spot, thus, either one of the first light flux and the second light flux having passed the third area forms a converged spot, and none of another light flux and the third light flux having passed the third area forms a converged spot.

In the present specification, optical discs using a violet semiconductor laser and a violet SHG laser as a light source for recording and reproducing of information are generically called "a high density optical disc", which also includes an optical disc (for example, HD DVD, hereafter HD) complying a standard that a thickness of a protective layer is about 0.6 mm and conducts recording and reproducing of information with an objective optical system having NA of 0.65 - 0.67, in addition to an optical disc (for example, a Blu Ray disc, hereafter BD) complying a standard that a thickness of a protective layer is about 0.1 mm and conducts recording and reproducing of information with an objective optical system having NA of 0.85. Further, in addition to the optical disc having the protective layer of that kind on its information recording surface, an optical disc having on its information recording surface a several-several tens nanometers-thick protective layer and an optical disc in which a thickness of a protective layer or a protective film is zero are also included. In the present specification, the high density optical disc includes also a magneto-optical disc using a violet semiconductor laser and a violet SHG laser as a light source for recording and reproducing of information.

In the present specification, DVD is a generic name for optical discs of DVD series such as DVD-ROM, DVD-Video, DVD-Audio, DVD-RAM, DVD-R, DVD-RW, DVD+R and DVD+RW, while, CD is a generic name for optical discs of CD series such as CD-ROM, CD-Audio, CD-Video, CD-R and CD-RW.

Further, in the present specification, "an objective optical system" means an optical system that is arranged at the position facing an optical disc in an optical pickup apparatus and includes at least a light converging element having functions to converge light fluxes each being emitted from a light source and having a different wavelength on each of information recording surfaces of optical discs each having a different recording density. The objective optical system may also be composed only of a light converging element.

Furthermore, when there is present an optical element that is subjected to tracking and focusing by an actuator together with the aforesaid light converging element, an optical element including the optical element and the light converging element is the objective optical system.

**BRIEF DESCRIPTION OF THE DRAWINGS**

Fig. 1 is a plan view of primary portions showing the structure of an optical pickup apparatus.
Fig. 2 is a side view showing an example of a diffractive optical element.
Each of Fig. 3 (a) and Fig. 3 (b) is a side view showing an example of a diffractive optical element.
Each of Fig. 4 (a) and Fig. 4 (b) is a side view showing an example of a diffractive optical element.
Each of Fig. 5 (a) and Fig. 5 (b) is a side view showing an example of a diffractive optical element.

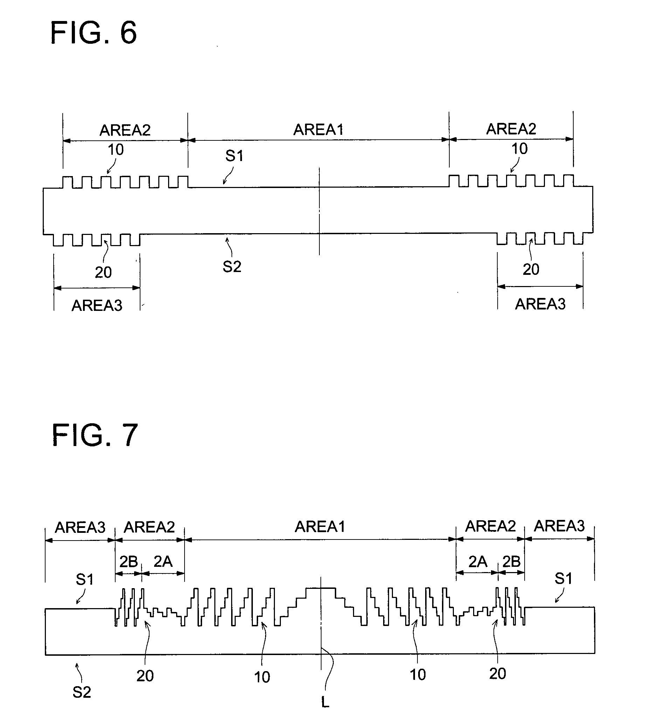

Fig. 6 is a side view showing an example of a diffractive optical element.
Fig. 7 is a side view showing an example of a diffractive optical element.

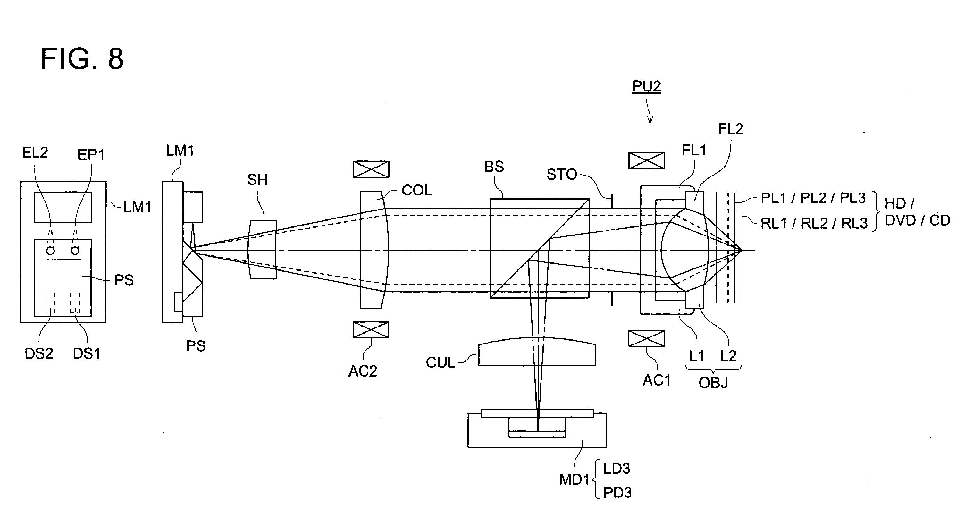

Fig. 8 is a plan view of primary portions showing the structure of an optical pickup apparatus.

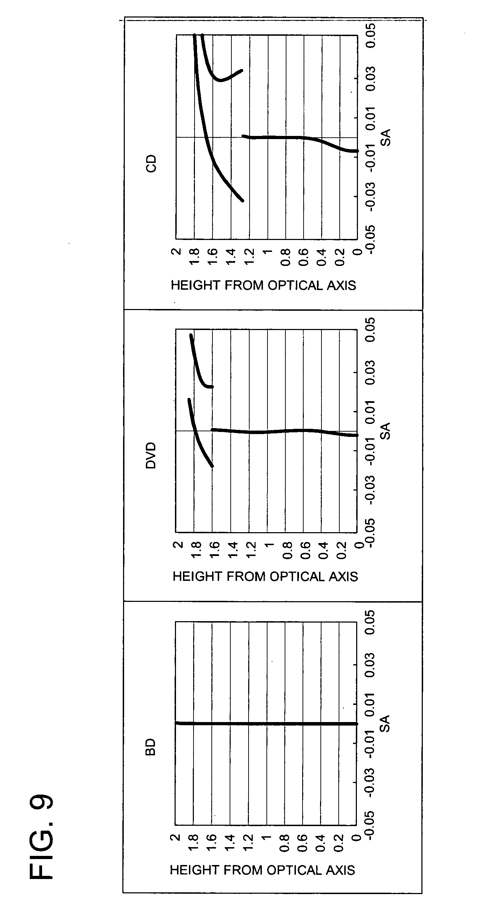

Fig. 9 is a longitudinal spherical aberration diagram in Example 1.

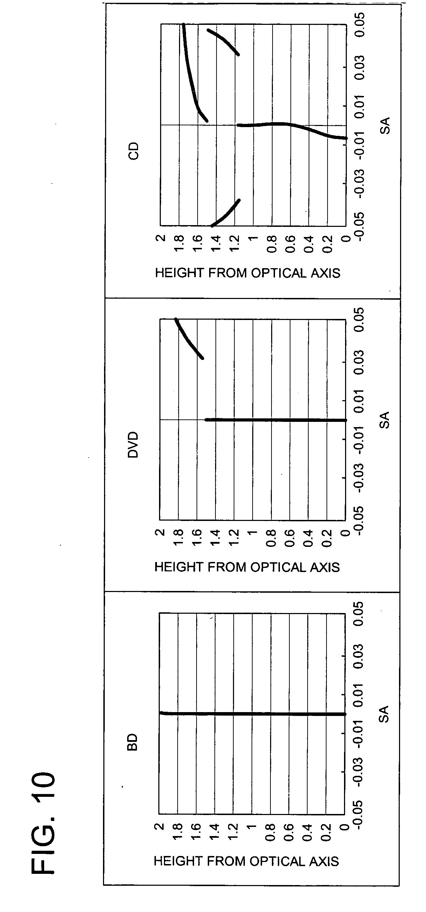

Fig. 10 is a longitudinal spherical aberration diagram in Example 2.

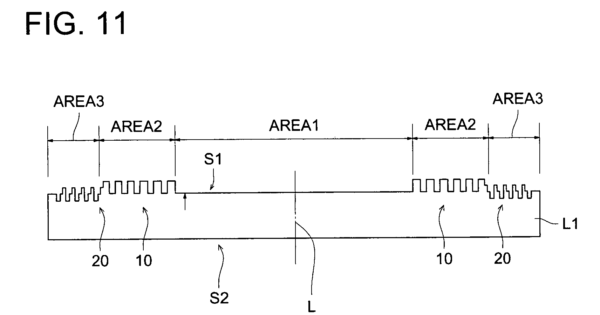

Fig. 11 is a side view showing an example of a diffractive optical element.

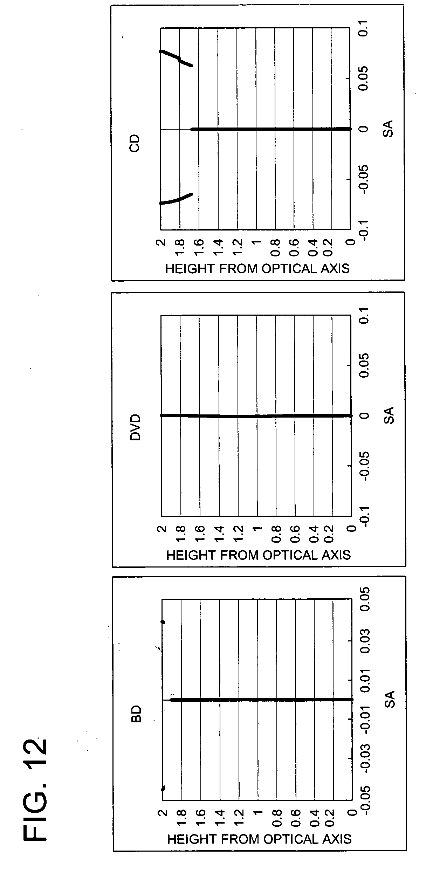

Fig. 12 is a longitudinal spherical aberration diagram in Example 3.

**DETAILED DESCRIPTION OF THE INVENTION**

Preferred embodiments of the invention will be explained as follows.

An optical pickup apparatus according to the present invention comprises a first light source emitting a first light flux with wavelength $\lambda 1$, a second light source emitting a second light flux with wavelength $\lambda 2$ ($\lambda 2 > \lambda 1$), a third light source emitting a third light flux with wavelength $\lambda 3$ ($\lambda 3 > \lambda 2$) and an objective optical system having a light converging element for converging the first light flux, the second light flux and the third light flux respectively on an information recording surface of a first optical disk with protective substrate thickness tl, an information recording surface of a second optical disk with protective substrate thickness t2 (t2 $\geq$ t1) and an information recording surface of a third optical disk with protective substrate thickness t3 (t3 > t2). A diffractive optical element is provided in of the optical pickup apparatus, the diffractive optical element is arranged in the common optical path for the first - third light fluxes, and an optical surface of the diffractive optical element includes a first area that is in a form of a concentric circle having its center on an optical axis and includes the optical axis, a second area that is in a form of a concentric circle having its center on the optical axis and is formed to be outside the first area and is provided with a first diffractive structure, and a third area that is in a form of a concentric circle having its center on the optical axis and is formed to be outside the first area and is provided with a second diffractive structure. Then, the first - third light fluxes having passed through the first area and the light converging element form converged spots respectively on information recording surfaces of the prescribed optical discs, the first and second light fluxes having passed through the second area and the light converging element form converged spots respectively on information recording surfaces of the prescribed optical discs, and the third light flux having passed through the second area and the light converging element does not form a converged spot on an information recording surface of the third light disk, while, either one of the first light flux and the second light flux having passed through the third area and the light converging element forms a converged spot on an information recording surface of the prescribed optical disc, and another light flux and the third light flux having passed through the third area and the light converging element do not form converged spots on information recording surfaces of the prescribed optical discs.

It is preferable that the diffractive structure is formed by one optical element. Furthermore, it is preferable that the second and third areas are formed on the one optical surface of the optical element, or the second area is formed on the one optical surface of the optical element and the third area is formed on the opposite optical surface of the optical element.

Since the second and third areas are formed on one optical element as above, it can save time and efforts of assembling and alignment, and space for the optical element, compared with the second and third areas formed on several optical elements.

Further, it is preferable that the first diffractive structure provides a diffractive action to the third light flux passing through the second area, and the second diffractive structure provides a diffractive action another of the first light flux and the second light flux passing through the third area.

Therefore, it is possible realize an aperture regulation by giving diffracting actions.

By making flare using the diffractive action, it is possible to give degrees of freedom to the shape of flare light and to reduce noise caused by flare light reflection on the optical information recording surface.

It is possible to make the optical pickup device to have aperture regulating functions concerning the third light flux, by forming a first diffractive structure on the second area, by providing a second diffractive structure on the third area, and by giving diffracting actions to the third light flux passing through the first and second diffractive structures to make flare component that does not contribute to spot formation on an information recording surface of the third optical disk, as described above.

Further, it is possible to make the optical pickup device to have aperture regulating functions concerning the second light flux, by giving diffracting actions to the second light flux passing through the second diffractive structure to make flare component that does not contribute to spot formation on an information recording surface of the second optical disk.

Therefore, in the optical pickup device having compatibility for three types of optical discs, it is not necessary to use a dichroic filter or a liquid crystal phase control element, for example, and it is possible to restrain the manufacturing cost of the optical pickup device.

It is preferable that the first diffractive structure is organized by forming the ring-shaped zones in a form of concentric circles each having its center on an optical axis having therein a stairs-structure (step-structure) formed by step portions and discontinuous portions in the prescribed quantity, and is established not to give a phase difference substantially to the first and second light fluxes passing through the second area, and the second diffractive structure is organized by forming the ring-shaped zones in a form of concentric circles each having its center on an optical axis having therein a stairs-structure (step-structure) formed by step portions and discontinuous portions in the prescribed quantity, and is established not to give a phase difference substantially to another light flux passing through the third area.

It is possible to provide a diffractive action just for a light flux with arbitral wavelength with such a structure.

It is preferable the following are satisfied when n1 represents the refractive index of the diffractive optical element for the wavelength $\lambda 1$, d1 represents a depth of a step portion of the step portion in the optical axis direction in the first diffractive structure, M1 (integer) represents the number of the discontinuous portions, d2 (integer) represents a depth of a step portion of the step portion in the optical axis direction in the second diffractive structure, and when d = $\lambda 1/(n1 - 1)$ holds.

$$4.8 \times d \leq d1 \leq 5.2 \times d, 2 \leq M1 \leq 4$$

$$1.9 \times d \leq d2 \leq 2.1 \times d, 4 \leq M2 \leq 6$$

The structure satisfying above expressions realize that an optical path difference in a substantial multiple of an integer is given to the first and second light fluxes, thus, a phase difference is not caused and no diffraction is made, and a phase difference is given only to the third light flux, and diffracting actions are given, in the first diffractive structure. In the second diffractive structure, on another hand, an optical path difference in a substantial multiple of an integer is given to the first and third light fluxes, and no diffraction is conducted because no phase difference is caused, thus, a phase difference is given only to the second light flux and diffracting actions are given. Incidentally, this effect is especially remarkable when the first diffractive structure and the second diffractive structure are formed respectively on different optical surfaces of the diffractive optical element.

It is preferable that the optical pickup apparatus satisfies following expressions,

$$4.8 \times d \; d1 \leq 5.2 \times d, 2 \leq M1 \leq 4$$

$$0.9 \times d \leq d2 \leq 1.1 \times d, M2 = 2$$

are satisfied.

The structure satisfying above expressions realize that an optical path difference in a substantial multiple of an integer is given to the first and second light fluxes, thus, a phase difference is not caused and no diffraction is made, and a phase difference is given only to the third light flux, and diffracting actions are given, in the first diffractive structure. In the second diffractive structure, on another hand, an optical path difference in a substantial multiple of an integer is given to the first light fluxe, and no diffraction is conducted because no phase difference is caused, thus, a phase difference is given to the second and the third light fluxes and diffracting actions are given. Incidentally, this effect is especially remarkable when the first diffractive structure and the second diffractive structure are formed respectively on same optical surfaces of the diffractive optical element.

In another invention according to the present invention, comprises a first light source emitting a first light flux with wavelength $\lambda 1$, a second light source emitting a second light flux with wavelength $\lambda 2$ ($\lambda 2 > \lambda 1$), a third light source emitting a third light flux with wavelength $\lambda 3$ ($\lambda 3 > \lambda 2$) and an objective optical system having a light converging element for converging the first light flux, the second light flux and the third light flux respectively on an information recording surface of a first optical disk with protective substrate thickness t1, an information recording surface of a second optical disk with protective substrate thickness t2 ($t2 \geq t1$) and an information recording surface of a third optical disk with protective substrate thickness t3 ($t3 > t2$). A diffractive optical element is provided in of the optical pickup apparatus, the diffractive optical element is arranged in the common optical path for the first - third light fluxes, and an optical surface of the diffractive optical element includes a first area that is in a form of a concentric circle having its center on an optical axis and includes the optical axis and is provided with a first diffractive structure, a second area that is in a form of a concentric circle having its center on the optical axis and is formed to be outside the first area and is provided with a second diffractive structure, and a third area that is in a form of a concentric circle having its center on the optical axis and is formed to be outside the first area. Then, the first - third light fluxes having passed through the first area and the light converging element form converged spots respectively on information recording surfaces of the prescribed optical discs, the first and the second light fluxes having passed through the second area and the light converging element form converged spots respectively on information recording surfaces of the prescribed optical discs, and the third light flux having passed through the second area and the light converging element does not form a converged spot on an information recording surface of the third light flux, while, either one of the first light flux and the second light flux having passed through the third area and the light converging element forms a converged spot on an information recording surface of the prescribed optical disc, and another light flux and the third light flux having passed through the third area and the light converging element do not form converged spots on information recording surfaces of the prescribed optical discs.

In the above structure, it is possible to make the optical pickup device to have aperture regulating functions concerning the third light flux, because a first diffractive structure is formed on the first area, a second diffractive structure is provided on the second area, and the third light flux passing through the first and second diffractive structures is made to be a flare component that does not contribute to spot formation on an information recording surface of the third optical disk.

Further, it is possible to make the optical pickup device to have aperture regulating functions concerning the second light flux, because the second light flux passing through the third area is made to be a flare component that does not contribute to spot formation on an information recording surface of the second optical disk.

Therefore, in the optical pickup device having compatibility for three types of optical discs, it is not necessary to use a dichroic filter or a liquid crystal phase control element, for example, as an aperture regulating means, and it is possible to restrain the manufacturing cost of the optical pickup device.

It is preferable that the diffractive structure is formed by one optical element. Furthermore, it is preferable that the second and third areas are formed on the one optical surface of the optical element, or the second area is formed on the one optical surface of the optical element and the third area is formed on the opposite optical surface of the optical element.

Since the second and third areas are formed on one optical element as above, it can save time and efforts of assembling and alignment, and space for the optical element, compared with the second and third areas formed on several optical elements.

Further it is preferable that the first diffractive structure provides diffractive action to the second light flux passing through the first area and the second diffractive structure provides diffractive action to the second light flux and the third light flux passing through the second area.

As described above, it is possible to correct a spherical aberration of the second light flux by providing the first diffractive structure, and to increase degree of freedom to magnification relationship of a compatible optical pickup apparatus (for example, magnification relationship when the infinite light fluxes with the first wavelength and the second wavelength enter to the objective optical element).

It is preferable that the first diffractive structure is organized by forming the ring-shaped zones in a form of concentric circles each having its center on an optical axis having therein a stairs-structure (step-structure) formed by steps portions and discontinuous portions in the prescribed quantity, and is established not to give a phase difference substantially to the first and third light fluxes passing through the first area, and the second diffractive structure is organized by forming the ring-shaped zones in a form of concentric circles each having its center on an optical axis having therein a stairs-structure (step-structure) formed by steps portions and discontinuous portions in the prescribed quantity, and is established not to give a phase difference substantially to the first light flux passing through the second area.

It is possible to provide a diffractive action just for a light flux with arbitral wavelength with such a structure.

It is preferable the following are satisfied when $n1$ represents the refractive index of the diffractive optical element for the wavelength $\lambda 1$, $d1$ represents a depth of a step portion of the step portion in the optical axis direction in the first diffractive structure, $M1$ (integer) represents the number of the discontinuous portions, $d2$ (integer) represents a depth of the step portion in the optical axis direction in the second diffractive structure, and when $d = \lambda 1/(n1 - 1)$ holds.

$$1.9 \times d \le d1 \le 2.1 \times d, \ 4 \le M1 \le 6$$

$$4.8 \times d \le d2 \le 5.2 \times d, \ 4 \le M2 \le 4$$

The structure satisfying above expressions realize that an optical path difference in a substantial multiple of an integer is given to the first and second light fluxes, thus, a phase difference is not caused and no diffraction is made, and a phase difference is given only to the third light flux, and diffracting actions are given, in the first diffractive structure. In the second diffractive structure, on another hand, an optical path difference in a substantial multiple of an integer is given to the first and third light fluxes, and no diffraction is conducted because no phase difference is caused, thus, a phase difference is given only to the second light flux and diffracting actions are given. Incidentally, this effect is especially remarkable when the first diffractive structure and the second diffractive structure are formed respectively on different optical surfaces of the diffractive optical element.

It is preferable that the optical pickup apparatus satisfies following expressions,

$$1.9 \times d \leq d1 \leq 2.1 \times d, \ 4 \leq M1 \leq 6$$

$$0.9 \times d \leq d2 \leq 1.1 \times d, \ 2 \leq M2 \leq 5$$

are satisfied.

The structure satisfying above expressions realize that an optical path difference in a substantial multiple of an integer is given to the first and second light fluxes, thus, a phase difference is not caused and no diffraction is made, and a phase difference is given only to the third light flux, and diffracting actions are given, in the first diffractive structure. In the second diffractive structure, on another hand, an optical path difference in a substantial multiple of an integer is given to the first light flux, and no diffraction is conducted because no phase difference is caused, thus, a phase difference is given only to the second and third light fluxes and diffracting actions are given. Incidentally, this effect is especially remarkable when the first diffractive structure and the second diffractive structure are formed respectively on same optical surface of the diffractive optical element.

The second area of the optical pickup apparatus is in a form of concentric circles each having its center on an optical axis, and is divided into at lease two areas including 2A area that is closer to the optical axis and 2B area that is farther from the optical axis, and the second diffractive structure formed on the 2A area is different in terms of a form from the second diffractive structure formed on the 2B area.

By dividing the area as above, it is possible to give degrees of freedom to the shape of flare light and to reduce noise caused by flare light reflection on the optical information recording surface.

It is preferable that the wavelength $\lambda 1$ - wavelength $\lambda 3$ satisfy the following in the optical pickup apparatus.

$$370 \ nm \leq \lambda 1 \leq 440 \ nm$$

$$620 \ nm \leq \lambda 2 \leq 690 \ nm$$

$$750 \ nm \leq \lambda 3 \leq 820 \ nm$$

It is preferable that the diffractive optical element in the optical pickup apparatus is a lens forming the objective optical system.

Incidentally, it is preferable that the optical pickup apparatus satisfies the following expression,

$$f1 \times NA1 > f2 \times NA2 > f3 \times NA3$$

and it is preferable to give diffracting actions to the second light flux passing through the third area.

In the expression above, each of f1, f2 and f3 represents a focal length of the objective optical element for each wavelength, and each of NA1, NA2 and NA3 represents a numerical aperture necessary for recording or reproducing of each optical disc.

The diffraction structure described above can make the second light flux flare light in the third area using the diffractive action. The diffractive action provides degrees of freedom to design the optical pickup apparatus, and it makes possible to reduce the noise caused by flare light reflection on the optical information recording surface.

It is preferable that the optical pickup apparatus satisfies the following expression.

$$0.75 \leq NA1 \leq 0.90$$

$$0.60 \leq NA2 \leq 0.70$$

$$0.43 \leq NA3 \leq 0.55$$

Therefore, by diffracting actions it is possible to make the second light flux flare light in the third area. The diffractive action provides degrees of freedom to design the optical pickup apparatus, and it makes possible to reduce the noise caused by flare light reflection on the optical information recording surface.

It is preferable that the optical pickup apparatus satisfies the following expression.

$$0.65 \leq NA1 \leq 0.70$$

$$0.60 \leq NA2 \leq 0.63$$

$$0.43 \leq NA3 \leq 0.55$$

Therefore, by diffracting actions it is possible to make the second light flux flare light in the third area. The diffractive action provides degrees of freedom to design the optical pickup apparatus, and it makes possible to reduce the noise caused by flare light reflection on the optical information recording surface.

Incidentally, it is preferable that the optical pickup apparatus satisfies the following expression,

$$f2 \times NA2 > f1 \times NA1 > f3 \times NA3$$

and it is preferable to give diffracting actions to the second light flux passing through the third area.

In the expression above, each of f1, f2 and f3 represents a focal length of the objective optical element for each wavelength, and each of NA1, NA2 and NA3 represents a numerical aperture necessary for recording or reproducing of each optical disc.

The diffraction structure described above can make the first light flux flare light in the third area using the diffractive action. The diffractive action provides degrees of freedom to design the optical pickup apparatus, and it makes possible to reduce the noise caused by flare light reflection on the optical information recording surface.

It is preferable that the optical pickup apparatus satisfies the following expression.

$$0.64 \leq NA1 \leq 0.65$$

$$0.64 \leq NA2 \leq 0.70$$

$$0.43 \leq NA3 \leq 0.55$$

It is preferable to give diffracting actions to the first light flux passing through the third area. The diffractive action provides degrees of freedom to design the optical pickup apparatus, and it makes possible to reduce the noise caused by flare light reflection on the optical information recording surface.

In another invention according to the present invention, comprises a first light source emitting a first light flux with wavelength λ1, a second light source emitting a second light flux with wavelength λ2 (λ2 > λ1), a third light source emitting a third light flux with wavelength λ3 (λ3 > λ2) and an objective optical system having a light converging element for converging the first light flux, the second light flux and the third light flux respectively on an information recording surface of a first optical disk with protective substrate thickness t1, an information recording surface of a second optical disk with protective substrate thickness t2 (t2 ≥ t1) and an information recording surface of a third optical disk with protective substrate thickness t3 (t3 > t2). A diffractive optical element is provided in of the optical pickup apparatus, the diffractive optical element is arranged in the common optical path for the first - third light fluxes, and an optical surface of the diffractive optical element includes a first area that is in a form of a concentric.circle having its center on an optical axis and includes the optical axis, a second area that is in a form of a concentric circle having its center on the optical axis and is formed to be outside the first area and is provided with a first diffractive structure, and a third area that is in a form of a concentric circle having its center on the optical axis and is formed to be outside the first area and is provided with a second diffractive structure. Then, the first - third light fluxes having passed through the first area and the light converging element form converged spots respectively on information recording surfaces of the prescribed optical discs, the first and second light fluxes having passed through the second area and the light converging element form converged spots respectively on information recording surfaces of the prescribed optical discs, and the third light flux having passed through the second area and the light converging element does not form a converged spot on an information recording surface of the third light flux, while, either one of the first light flux and the second light flux having passed through the third area and the light converging element forms a converged spot on an information recording surface of the prescribed optical disc, and another light flux and the third light flux having passed through the third area and the light converging element do not form converged spots on information recording surfaces of the prescribed optical discs.

In the above structure, it is possible to make the optical pickup device to have aperture regulating functions concerning the third light flux, because a first diffractive structure is formed on the second area, a second diffractive structure is provided on the third area, and the third light flux passing through the first and second diffractive structures is made to be a flare component that does not contribute to spot formation on an information recording surface of the third optical disk.

Further, it is possible to make the optical pickup device to have aperture regulating functions concerning the second light flux, because the second light flux passing through the second diffractive structure is made to be a flare component that does not contribute to spot formation on an information recording surface of the second optical disk.

Therefore, in the optical pickup device having compatibility for three types of optical discs, it is not necessary to use a dichroic filter or a liquid crystal phase control element, for example, as an aperture regulating means, and it is possible to restrain the manufacturing cost of the optical pickup device.

It is preferable that the diffractive structure is formed by one optical element. Furthermore, it is preferable that the second and third areas are formed on the one optical surface of the optical element, or the second area is formed on the one optical surface of the optical element and the third area is formed on the opposite optical surface of the optical element.

Since the second and third areas are formed on one optical element as above, it can save time and efforts of assembling and alignment, and space for the optical element, compared with the second and third areas formed on several optical elements.

Further, it is preferable that the first diffractive structure provides a diffractive action to the third light flux passing through the second area, the second diffractive structure provides a diffractive action to another light flux passing through the third area.

Therefore, it is possible realize an aperture regulation by giving diffracting actions.

By making flare using the diffractive action, it is possible to give degrees of freedom to the shape of flare light and to reduce noise caused by flare light reflection on the optical information recording surface.

It is preferable that the first diffractive structure is organized by forming the ring-shaped zones in a form of concentric circles each having its center on an optical axis having therein a stairs-structure (step-structure) formed by step portions and discontinuous portions in the prescribed quantity, and is established not to give a phase difference substantially to the first and second light fluxes passing through the second area, and the second diffractive structure is organized by forming the ring-shaped zones in a form of concentric circles each having its center on an optical axis having therein a stairs-structure formed step portions and by discontinuous portions in the prescribed quantity, and is established not to give a phase difference substantially to another light flux passing through the third area.

It is possible to provide a diffractive action just for a light flux with arbitral wavelength with such a structure.

It is preferable the following are satisfied when n1 represents the refractive index of the diffractive optical element for the wavelength $\lambda 1$, d1 represents a depth of the step portion in the optical axis direction in the first diffractive structure, M1 (integer) represents the number of the discontinuous portions, d2 (integer) represents a depth of the step portion in the optical axis direction in the second diffractive structure, and when d = $\lambda 1/(n1 - 1)$ holds.

$$4.8 \times d \leq d1 \leq 5.2 \times d, \quad 2 \leq M1 \leq 4$$

$$1.9 \times d \leq d2 \leq 2.1 \times d, \quad 4 \leq M2 \leq 6$$

The structure satisfying above expressions realize that an optical path difference in a substantial multiple of an integer is given to the first and second light fluxes, thus, a phase difference is not caused and no diffraction is made, and a phase difference is given only to the third light flux, and diffracting actions are given, in the first diffractive structure. In the second diffractive structure, on another hand, an optical path difference in a substantial multiple of an integer is given to the first and third light fluxes, and no diffraction is conducted because no phase difference is caused, thus, a phase difference is given only to the second light flux and diffracting actions are given. Incidentally, this effect is especially remarkable when the first diffractive structure and the second diffractive structure are formed respectively on different optical surfaces of the diffractive optical element.

It is preferable that the optical pickup apparatus satisfies following expressions,

$$4.8 \times d \leq d1 \leq 5.2 \times d, \quad 2 \leq M1 \leq 4$$

$$0.9 \times d \leq d2 \leq 1.1 \times d, \quad M2 = 2$$

are satisfied.

The structure satisfying above expressions realize that an optical path difference in a substantial multiple of an integer is given to the first and second light fluxes, thus, a phase difference is not caused and no diffraction is made, and a phase difference is given only to the third light flux, and diffracting actions are given, in the first diffractive structure. In the second diffractive structure, on another hand, an optical path difference in a substantial multiple of an integer is given to the first light flux, and no diffraction is conducted because no phase difference is caused, thus, a phase difference is given to the first and second light fluxes and diffracting actions are given. Incidentally, this effect is especially remarkable when the first diffractive structure and the second diffractive structure are formed respectively on same optical surface of the diffractive optical element.

Another diffractive optical element for the optical pickup apparatus according to the present invention is an diffractive optical element for an optical pickup device having therein a first light source emitting a first light flux with wavelength $\lambda1$, a second light source emitting a second light flux with wavelength $\lambda2$ ($\lambda2 > \lambda1$), a third light source emitting a third light flux with wavelength $\lambda3$ ($\lambda3 > \lambda2$) and an objective optical system for converging the first light flux, the second light flux and the third light flux respectively on an information recording surface of a first optical disk with protective substrate thickness t1, an information recording surface of a second optical disk with protective substrate thickness t2 ($t2 \geq t1$) and an information recording surface of a third optical disk with protective substrate thickness t3 ($t3 > t2$). The diffractive optical element is provided in an optical system of the optical pickup device, the diffractive optical element is arranged in the common optical path for the first - third light fluxes, and an optical surface of the diffractive optical element includes a first area that is in a form of a concentric circle having its center on an optical axis and includes the optical axis and is provided with a first diffractive structure, a second area that is in a form of a concentric circle having its center on the optical axis and is formed to be outside the first area and is provided with a second diffractive structure, and a third area that is in a form of a concentric circle having its center on the optical axis and is formed to be outside the first area. Then, the first - third light fluxes having passed through the first area and the light converging element form converged spots respectively on information recording surfaces of the prescribed optical discs, the first and second light fluxes having passed through the second area and the light converging element form converged spots respectively on information recording surfaces of the prescribed optical discs, and the third light flux having passed through the second area and light converging element does not form a converged spot on an information recording surface of the third light flux, while, either one of the first light flux and the second light flux having passed through the third area and the light converging element forms a converged spot on an information recording surface of the prescribed optical disc, and another light flux and the third light flux having passed through the third area and the light converging element do not form converged spots on information recording surfaces of the prescribed optical discs.

In the above structure, it is possible to make the optical pickup device to have aperture regulating functions concerning the third light flux, because a first diffractive structure is formed on the first area, a second diffractive structure is provided on the second area, and the third light flux passing through the first and second diffractive structures is made to be a flare component that does not contribute to spot formation on an information recording surface of the third optical disk.

Further, it is possible to make the optical pickup device to have aperture regulating functions concerning the second light flux, because the second light flux passing through the third area is made to be a flare component that does not contribute to spot formation on an information recording surface of the second optical disk.

Therefore, in the optical pickup device having compatibility for three types of optical discs, it is not necessary to use a dichroic filter or a liquid crystal phase control element, for example, as an aperture regulating means, and it is possible to restrain the manufacturing cost of the optical pickup device.

It is preferable that the diffractive structure is formed by one optical element. Furthermore, it is preferable that the second and third areas are formed on the one optical surface of the optical element, or the second area is formed on the one optical surface of the optical element and the third area is formed on the opposite optical surface of the optical element.

Since the second and third areas are formed on one optical element as above, it can save time and efforts of assembling and alignment, and space for the optical element, compared with the second and third areas formed on several optical elements.

Further it is preferable that the first diffractive structure provides diffractive action to the second light flux passing through the first area and the second diffractive structure provides diffractive action to the second light flux and the third light flux passing through the second area.

As described above, it is possible to correct a spherical aberration of the second light flux by providing the first diffractive structure, and to increase degree of freedom to magnification relationship of a compatible optical pickup apparatus (for example, magnification relationship when the infinite light fluxes with the first wavelength and the second wavelength enter to the objective optical element).

It is preferable that the first diffractive structure is organized by forming the ring-shaped zones in a form of concentric circles each having its center on an optical axis having therein a stairs-structure (step-structure) formed by step portions and discontinuous portions in the prescribed quantity, and is established not to give a phase difference substantially to the first and third light fluxes passing through the first area, and the second diffractive structure is organized by forming the ring-shaped zones in a form of concentric circles each having its center on an optical axis having therein a stairs-structure formed by step portions and discontinuous portions in the prescribed quantity, and is established not to give a phase difference substantially to the first light flux passing through the second area.

It is possible to provide a diffractive action just for a light flux with arbitral wavelength with such a structure.

It is preferable the following are satisfied when n1 represents the refractive index of the diffractive optical element for the wavelength $\lambda 1$, d1 represents a depth of the step portion in the optical axis direction in the first diffractive structure, M1 (integer) represents the number of the discontinuous portions, d2 (integer) represents a depth of the step portion in the optical axis direction in the second diffractive structure, and when d = $\lambda 1/(n1 - 1)$ holds.

$$1.9 \times d \le d1 \le 2.1 \times d, \ 4 \le M1 \le 6$$

$$4.8 \times d \le d2 \le 5.2 \times d, \ 4 \le M2 \le 6$$

The structure satisfying above expressions realize that an optical path difference in a substantial multiple of an integer is given to the first and second light fluxes, thus, a phase difference is not caused and no diffraction is made, and a phase difference is given only to the third light flux, and diffracting actions are given, in the first diffractive structure. In the second diffractive structure, on another hand, an optical path difference in a substantial multiple of an integer is given to the first and the third light fluxes, and no diffraction is conducted because no phase difference is caused, thus, a phase difference is given only to the second light flux and diffracting actions are given. Incidentally, this effect is especially remarkable when the first diffractive structure and the second diffractive structure are formed respectively on different optical surfaces of the diffractive optical element.

It is preferable that the optical pickup apparatus satisfies following expressions,

$$1.9 \times d \le d1 \le 2.1 \times d, \ 4 \le M1 \le 6$$

$$0.9 \times d \le d2 \le 1.1 \times d, \ 2 \le M2 \le 5$$

are satisfied.

The structure satisfying above expressions realize that an optical path difference in a substantial multiple of an integer is given to the first and second light fluxes, thus, a phase difference is not caused and no diffraction is made, and a phase difference is given only to the third light flux, and diffracting actions are given, in the first diffractive structure. In the second diffractive structure, on another hand, an optical path difference in a substantial multiple of an integer is given to the first light flux, and no diffraction is conducted because no phase difference is caused, thus, a phase difference is given to the second and the third light fluxes and diffracting actions are given. Incidentally, this effect is especially remarkable when the first diffractive structure and the second diffractive structure are formed respectively on same optical surface of the diffractive optical element.

The second area of the optical pickup apparatus is in a form of concentric circles each having its center on an optical axis, and is divided into at lease two areas including 2A area that is closer to the optical axis and 2B area that is farther from the optical axis, and the second diffractive structure formed on the 2A area is different in terms of a form from the second diffractive structure formed on the 2B area.

By dividing the area as above, it is possible to give degrees of freedom to the shape of flare light and to to reduce noise caused by flare light reflection on the optical information recording surface.

It is preferable that the wavelength $\lambda 1$ - wavelength $\lambda 3$ satisfy the following in the optical pickup apparatus.

$$370 \text{ nm} \leq \lambda 1 \leq 440 \text{ nm}$$

$$620 \text{ nm} \leq \lambda 2 \leq 690 \text{ nm}$$

$$750 \text{ nm} \leq \lambda 3 \leq 820 \text{ nm}$$

It is preferable that the optical pickup apparatus satisfies the following expression.

$$0.75 \leq NA1 \leq 0.90$$

$$0.60 \leq NA2 \leq 0.70$$

$$0.43 \leq NA3 \leq 0.55$$

It is preferable to give diffracting actions to the second light flux passing through the third area. The diffractive action provides degrees of freedom to design the optical pickup apparatus, and it makes possible to reduce the noise caused by flare light reflection on the optical information recording surface.
It is preferable that the optical pickup apparatus satisfies the following expression.

$$0.65 \leq NA1 \leq 0.70$$

$$0.60 \leq NA2 \leq 0.63$$

$$0.43 \leq NA3 \leq 0.55$$

It is preferable to give diffracting actions to the second light flux passing through the third area. The diffractive action provides degrees of freedom to design the optical pickup apparatus, and it makes possible to reduce the noise caused by flare light reflection on the optical information recording surface.
It is preferable that the optical pickup apparatus satisfies the following expression.

$$0.64 \leq NA1 \leq 0.65$$

$$0.64 \leq NA2 \leq 0.70$$

$$0.43 \leq NA3 \leq 0.55$$

It is preferable to give diffracting actions to the first light flux passing through the third area. The diffractive action provides degrees of freedom to design the optical pickup apparatus, and it makes possible to reduce the noise caused by flare light reflection on the optical information recording surface.
Another diffractive optical element for the optical pickup apparatus according to the present invention is an optical pickup apparatus for recording and/or reproducing information on an information recording surface of an optical disk having a protective substrate with a predefined thickness, comprising: a first light source emitting a first light flux with a wavelength $\lambda 1$ for information recording and/or reproducing on an optical recording surface of a first optical disk having a protective substrate with a thickness tl; a second light source emitting a second light flux with a wavelength $\lambda 2$ ($\lambda 2 > \lambda 1$) for information recording and/or reproducing on an optical recording surface of a second optical disk having a protective substrate with a thickness t2($t2 \geq t1$); a third light source emitting a third light flux with a wavelength λ2 (λ3 > λ2) for information recording and/or reproducing on an optical recording surface of a third optical disk having a protective substrate with a thickness t3 (t3 > t2); a diffractive optical element for transmitting the first - third light fluxes and; an objective optical system having a light converging element for converging the first - third light fluxes which have passed the diffractive optical element onto the first - third optical disks respectively. The diffractive optical element includes a first area whose center is on an optical axis; a second area formed in a ring-shape and arranged outside of the first area along a perpendicular direction to the optical axis; a third area formed in a ring-shape and arranged outside of the second area along a perpendicular direction to the optical axis; and the first area, the second area and third area have different optical properties each other for the first - third light fluxes, the third area does not form two light fluxes among the first - third light fluxes passing the third area and the light converging element into converged spots on the information recording surfaces of corresponding disks.

It is preferable that the optical pickup apparatus satisfies following expressions,

$$370 \text{ nm} \leq \lambda 1 \leq 440 \text{ nm}$$

$$620 \text{ nm} \leq \lambda 2 \leq 690 \text{ nm}$$

$$750 \text{ nm} \leq \lambda 3 \leq 820 \text{ nm}$$

the second area comprises a first diffractive structure having a plurality of ring-shaped zones whose centers are on the optical axis and provides a diffractive action to one of the first - third light fluxes, each of the plurality of ring-shaped zones of the first diffractive structure comprises a step structure including a predefined number of discontinuous portions and step portions,

the third area comprises a second diffractive structure having a plurality of ring-shaped zones whose centers are on the optical axis, provides a diffractive action to one of the first - third light fluxes and has a different structure from the first diffractive structure,

each of the plurality of ring-shaped zones of the second diffractive structure comprises a step structure including a predefined number of discontinuous portions and step portions, and the third area does not form the second light flux and the third light flux among the first - third light fluxes passing the third area and the light converging element into converged spots on the information recording surfaces of the second and the third disks.

It is preferable that the optical pickup apparatus satisfies following expressions,

$$370 \text{ nm} \leq \lambda 1 \leq 440 \text{ nm}$$

$$620 \text{ nm} \leq \lambda 2 \leq 690 \text{ nm}$$

$$750 \text{ nm} \leq \lambda 3 \leq 820 \text{ nm}$$

the first area comprises a first diffractive structure having a plurality of ring-shaped zones whose centers are on the optical axis and provides a diffractive action to one of the first - third light fluxes,

each of the plurality of ring-shaped zones of the first diffractive structure comprises a step structure including a predefined number of discontinuous portions and step portions,

the second area comprises a second diffractive structure having a plurality of ring-shaped zones whose centers are on the optical axis, provides a diffractive action to one of the first - third light fluxes, and has a different structure from the first diffractive structure,

each of the plurality of ring-shaped zones of the second diffractive structure comprises a step structure including a predefined number of discontinuous portions and step portions, and the third area does not form the second light flux and the third light flux among the first - third light fluxes passing the third area and the light converging element into converged spots on the information recording surfaces of the second and the third disks.

It is preferable that the diffractive optical element consists of one optical element and one optical surface of the optical element includes the second area and the third area.

It is preferable that the diffractive optical element consists of one optical element, one optical surface of the optical element includes the second area and an opposite optical surface includes the third area.

It is preferable that the optical pickup apparatus satisfying following expressions,

$$0.65 \leq NA1 \leq 0.70$$

$$0.60 \leq NA2 \leq 0.63$$

$$0.43 \leq NA3 \leq 0.55$$

where NA1, NA2 and N3 are numerical apertures used for recording or producing the first, second and third disks respectively.

It is preferable that the optical pickup satisfying following expressions,

$$0.64 \leq NA1 \leq 0.65$$

$$0.64 \leq NA2 \leq 0.70$$

$$0.43 \leq NA3 \leq 0.55$$

where NA1, NA2 and N3 are numerical apertures used for recording or producing the first, second and third disks respectively.

In the present specification, "giving diffracting actions" or "providing diffracting actions" is equivalent to an occasion where a light flux passing through a diffractive structure satisfies Bragg condition, namely to an occasion where the diffractive structure generates light with specific diffraction order number whose absolute value is 1 or more at the higher diffraction efficiency compared with light with other diffraction order numbers (including 0), in accordance with a wavelength of an incident light flux, and especially to an occasion to generate light at the diffraction efficiency of 25% or more.

Further, in the present specification, "flare light" is an incident light flux with a numerical aperture of not less than the prescribed number which does not contribute to formation of a spot necessary for recording or reproducing on a prescribed information recording surface. For example, in the case of recording or reproducing for CD, the flare light is light that generates aberration having wavefront aberration of 0.07 λ3rms (in this case, λ3 is a wavelength in using CD) or more for the incident light flux corresponding to the higher numerical aperture than the numerical aperture 0 - 0.43 or 0.45 which is necessary for recording or reproducing of the CD. "make flare light" means to provide an incident light flux a property so as to make the incident light flux a light flux with the above described aberration when the incident light irradiates onto the information recording surface.

In the present specification, "generating no phase difference substantially" or "providing no phase difference substantially" means an occasion where shifting of a phase caused by a stairs-structure of the diffractive structure is within $\pm\ 0.2\pi$, in the light flux passing through the diffractive structure.

The present invention makes it possible to obtain an optical pickup apparatus equipped with an optical element capable of conducting appropriate aperture regulating for three types of optical discs including a high density optical disc employing a violet laser light source, DVD and CD.

A preferred embodiment for practicing the invention will be explained as follows, referring to the drawings.

(First Embodiment)

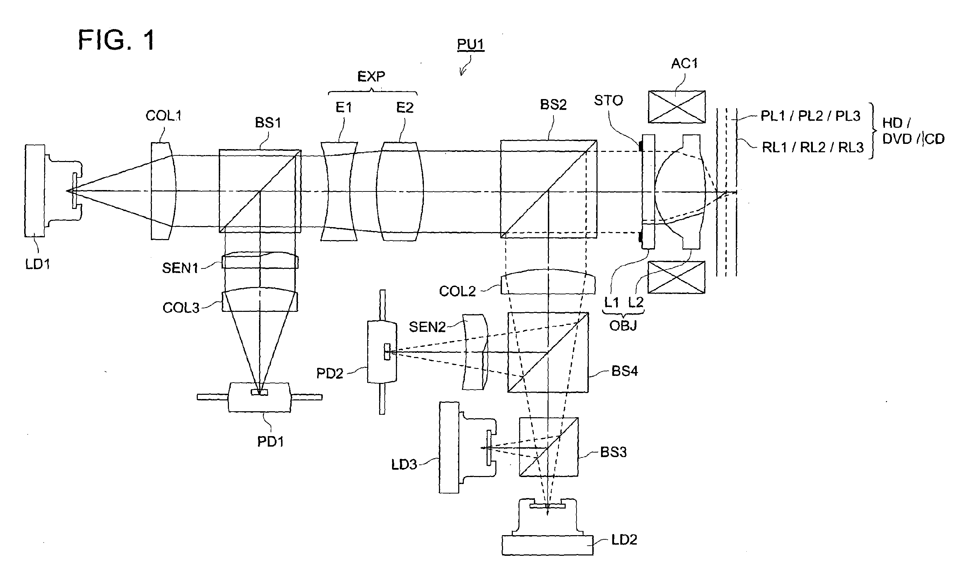

Fig. 1 is a diagram showing schematically the structure of first optical pickup apparatus PU1 capable of conducting recording and reproducing of information properly for any of high density optical disc HD (first optical disk), DVD (second optical disk) and CD (third optical disk). In the optical specifications of the high density optical disc HD, first wavelength λ1 is 408 nm, thickness t1 of first protective layer PL1 is 0.0875 mm and numerical aperture NA1 is 0.85, in the optical specifications of DVD, second wavelength λ2 is 658 nm, thickness t2 of second protective layer PL2 is 0.6 mm and numerical aperture NA2 is 0.60, and in the optical specifications of CD, third wavelength λ3 is 785 nm, thickness t3 of third protective layer PL3 is 1.2 mm and numerical aperture NA3 is 0.45.

Recording densities ($\rho1$ - $\rho3$) respectively for first optical disk - third optical disk satisfy $\rho3 < \rho2 < \rho1$, and

magnifications (first magnification M1 - third magnification M3) of objective optical system OBJ in the case of conducting recording and/or reproducing of information respectively for the first optical disk - third optical disk satisfy M1 = M2 = M3 = 0. Incidentally, a combination of a wavelength, a protective layer thickness, a numerical aperture, recording density and a magnification is not limited to the foregoing.

Optical pickup apparatus PU1 is substantially composed of violet semiconductor laser LD 1 (first light source) that emits a laser light flux (first light flux) with wavelength of 408 nm radiated when conducting recording and reproducing of information for high density optical disc HD, red semiconductor laser LD 2 (second light source) that emits a laser light flux (second light flux) with wavelength of 658 nm radiated when conducting recording and reproducing of information for DVD, infrared semiconductor laser LD 3 (third light source) that emits a laser light flux (third light flux) with wavelength of 785 nm radiated when conducting recording and reproducing of information for first photo-detector PD1 that receives reflected light flux coming from information recording surface RL1 of high density disc HD and for CD, second photo-detector PD2 that receives reflected light flux coming from information recording surface RL2 of DVD or from information recording surface RL3 of CD, objective optical system OBJ having therein diffractive optical element L1 in which a diffractive structure is formed on an optical surface and light converging element L2 representing a both-sided aspheric lens having functions to converge a laser light flux having been transmitted through the diffractive optical element L1 respectively on information recording surfaces RL1, RL2 and RL3, biaxial actuator AC1, diaphragm STO corresponding to numerical aperture NA1 of high density optical disc HD, first - fourth polarization beam splitters BS1 - BS4, first - third collimator lenses COL1 - COL3, beam expander EXP, first sensor lens SEN1 and second sensor lens SEN2.

In the optical pickup apparatus PU1, when conducting recording and reproducing for high density optical disc HD, violet semiconductor laser LD1 is made to radiate as its light path is shown with solid lines in Fig. 1. A divergent light flux emitted from the violet semiconductor laser LD1 is transmitted through the first polarization beam splitter BS1 after being converted into a parallel light flux by the first collimator lens COL1, then, is regulated in terms of a light flux diameter by the diaphragm STO after being transmitted through the beam expander EXP and the second polarization beam splitter BS2, and becomes a spot formed by the objective optical system OBJ on the information recording surface RL1 through the first protective layer PL1. The objective optical system OBJ conducts focusing and tracking with the biaxial actuator AC1 that is arranged around the objective optical system OBJ.

The reflected light flux modulated by information pits on the information recording surface RL1 passes again through the objective optical system OBJ, the second polarization beam splitter BS2, and beam expander EXP, then, is reflected by the first polarization beam splitter BS1, then, is given astigmatism by the sensor lens SEN1, and is converted into a converged light flux by the third collimator lens COL3 to be converged on a light-receiving surface of the first photo-detector PD1. Thus, it is possible to read information recorded on high density optical disc HD by using output signals of the first photo-detector PD1.

When conducting recording and reproducing of information for DVD, red semiconductor laser LD2 is made to radiate first. A divergent light flux emitted from the red semiconductor laser LD2 passes through the third polarization beam splitter and the fourth polarization beam splitter as its light path is shown with dotted lines in Fig. 1, and is converted into a parallel light flux by the second collimator lens COL2. After that, the light flux is reflected by the second beam splitter BS2 and becomes a spot formed by the objective optical system OBJ on the information recording surface RL2 through the second protective layer PL2. The objective optical system OBJ conducts focusing and tracking with the biaxial actuator AC1 that is arranged around the objective optical system OBJ. The reflected light flux modulated by information pits on the information recording surface RL2 passes again through the objective optical system OBJ, and is reflected on the second polarization beam splitter BS2, then, is converted into a convergent light flux by the second collimator lens COL2, and is reflected by the fourth polarization beam splitter BS4, then, is given astigmatism by the second sensor lens SEN2, to be converged on a light-receiving surface of the second photo-detector PD2. Thus, it is possible to read information recorded on DVD by using output signals of the second photo-detector PD2.

When conducting recording and reproducing of information for CD, infrared semiconductor laser LD3 is made to radiate. A divergent light flux emitted from the infrared semiconductor laser LD3 is reflected by the third polarization beam splitter, and passes through the fourth polarization beam splitter as its light path is shown with dotted lines in Fig. 1, and is converted into a parallel light flux by the second collimator lens COL2. After that, the light flux is reflected by the second beam splitter BS2 and becomes a spot formed by the objective optical system OBJ on the information recording surface RL3 through the third protective layer PL3. The objective optical system OBJ conducts focusing and tracking with the biaxial actuator AC1 that is arranged around the objective optical system OBJ. The reflected light flux modulated by information pits on the information recording surface RL3 passes again through the objective optical system OBJ, and is reflected on the second polarization beam splitter BS2, then, is converted into a convergent light flux by the second collimator lens COL2, and is reflected by the fourth polarization beam splitter BS4, then, is given astigmatism by the second sensor lens SEN2, to be converged on a light-receiving surface of the second photo-detector PD2. Thus, it is possible to read information recorded on CD by using output signals of the second photo-detector PD2.

Next, the structure of the objective optical system OBJ will be explained as follows. Diffractive optical element L1 is a plastic lens whose refractive index nd for d line is 1.5091, Abbe's number vd is 56.5 and its refractive index for λ1 is 1.5242, refractive index for λ2 is 1.5064 and refractive index for λ3 is 1.5050. Light converging element L2 is a plastic lens.whose refractive index nd for d line is 1.5435 and Abbe's number vd is 56.3. Incidentally, though an illustration will be omitted, optical functional sections (areas for the diffractive optical element L1 through which the first light flux passes and for the light converging element L2) have, around them, flange portions each being formed to be united with each optical functional section, respectively, and the optical functional sections are united solidly when a part of each flange portion is connected with that of another flange portion.

Incidentally, when the diffractive optical element L1 and the light converging element L2 are united solidly, they may also be united through a lens frame that is an another member.

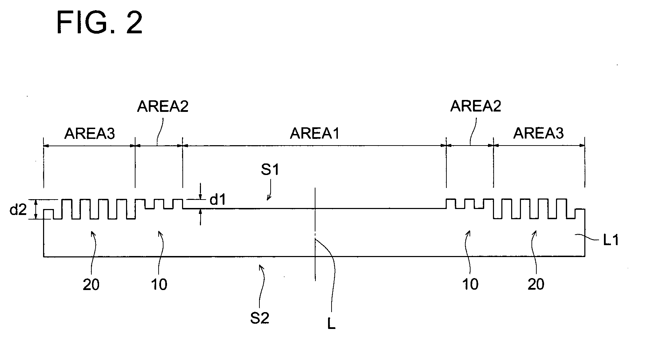

Optical surface S1 (surface of incidence) of the diffractive optical element L1 closer to the semiconductor laser light source is divided, as shown in Fig. 2, into first area AREA1 that is in a form of concentric circles corresponding to an area within NA3 each having a center on an optical axis and includes optical axis L, second area AREA1 that is in a form of concentric circles corresponding to an area within NA2 each having a center on an optical axis and is formed outside the first area AREA1 and is equipped with first diffractive structure 10 and third area AREA3 that is in a form of concentric circles corresponding to an area within NA1 and is formed outside the first area AREAL and is equipped with second diffractive structure 20.

Incidentally, when an aperture diameter of BD or HD DVD is greater than that of DVD,

$$f1 \times NA1 > f2 \times NA2 > f3 \times NA3$$

is satisfied, and it is preferable to give diffracting actions to the second light flux passing through the third area.

In the expression above, each of f1, f2 and f3 represents a focal length of the objective optical element for each wavelength, and each of NA1, NA2 and NA3 represents a numerical aperture necessary for recording or reproducing of each optical disc.

The opening aperture NA1, NA2 and NA3 of the above structure, which satisfy the following expressions are listed, for example.

$$0.75 \leq NA1 \leq 0.90$$

$$0.60 \leq NA2 \leq 0.70$$

$$0.43 \leq NA3 \leq 0.55$$

Furthermore, the structure with the opening aperture NA1, NA2 and NA3 which satisfy the following expressions may also be provided.

$$0.65 \leq NA1 \leq 0.70$$

$$0.60 \leq NA2 \leq 0.63$$

$$0.43 \leq NA3 \leq 0.55$$

When an aperture diameter of DVD is greater than that of BD or HD DVD,

$$f2 \times NA2 > f1 \times NA1 > f3 \times NA3$$

is satisfied, and it is preferable to give diffracting actions to the first light flux passing through the third area.

In the expression above, each of f1, f2 and f3 represents a focal length of the objective optical element for each wavelength, and each of NA1, NA2 and NA3 represents a numerical aperture necessary for recording or reproducing of each optical disc.

The opening aperture NA1, NA2 and NA3 of the above structure, which satisfy the following expressions are listed, for example.

$$0.64 \leq NA1 \leq 0.65$$

$$0.64 \leq NA2 \leq 0.70$$

$$0.43 \leq NA3 \leq 0.55$$

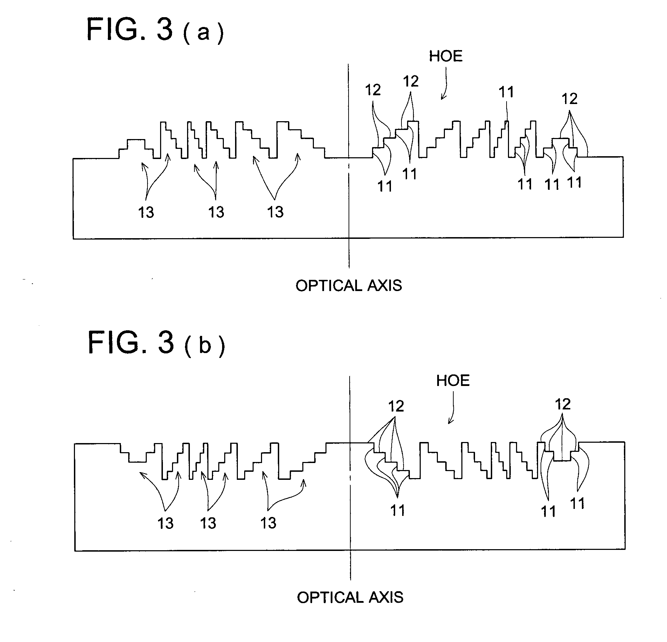

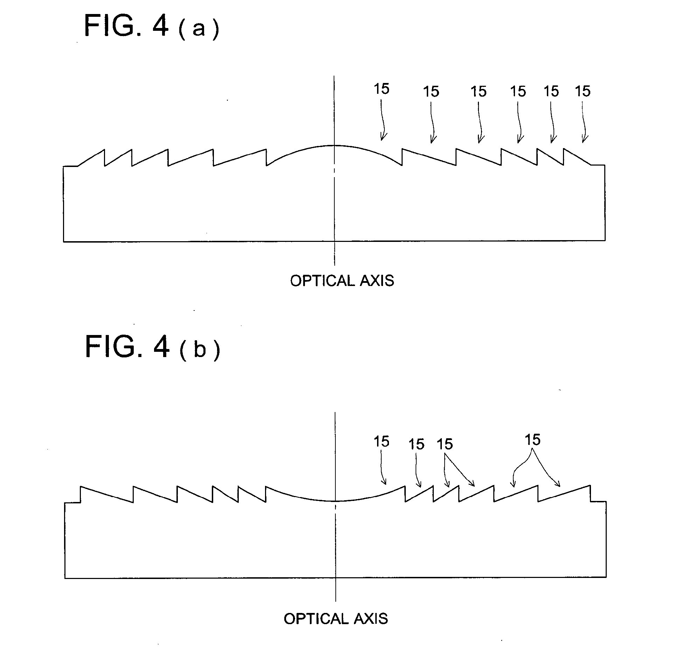

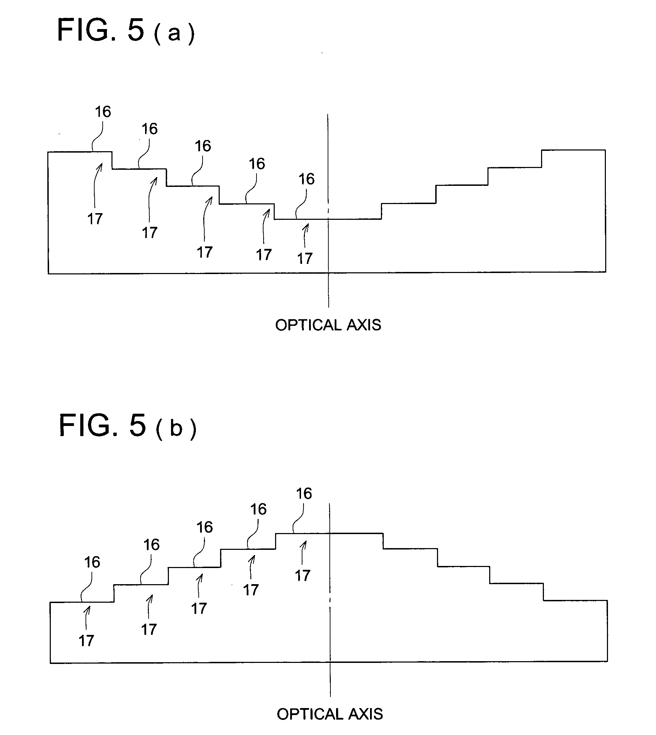

As the first diffractive structure 10 and the second diffractive structure 20, there are given a structure organized by forming periodically the ring-shaped zones 13 in a form of concentric circles each having its center on an optical axis L having therein a stairs-structure (step-structure) formed by step portions 11 in the prescribed quantity and by discontinuous portions 12, as shown schematically in Figs. 3 (a) and 3 (b) (hereinafter, this diffractive structure is called "diffractive structure HOE"), a structure that is organized by a plurality of ring-shaped zones 15, and has a form of sectional view including optical axis L which is in a form of serration, as shown schematically in Figs. 4 (a) and 4 (b), and a structure that is organized by a plurality of ring-shaped zones 17 in which directions of step portions 16 are the same in an effective diameter and has a form of sectional view including an optical axis which is in a form of stairs, as shown schematically in Figs. 5 (a) and 5 (b). Incidentally, each of Fig. 3 (a) - Fig. 5 (b) is one showing schematically an occasion wherein each diffractive structure is formed on a plane, and each diffractive structure may also be formed on a spherical surface or on an aspheric surface.

In the present embodiment, each of the first diffractive structure 10 formed on the second area AREA2 and the second diffractive structure 20 formed on the third area AREA3 is organized by the diffractive structure HOE as shown in Figs. 3 (a) and 3 (b).

Specifically, level differences d1 and d2, number of discontinuous portions M1 and M2 are established so that

$$4.8 \times d \leq d1 \leq 5.2 \times d, \ 2 \leq M1 \leq 4$$

$$1.9 \times d \leq d2 \leq 2.1 \times d, \ 4 \leq M2 \leq 6$$

may be satisfied, and each of M1 and M2 is 2, when $d = \lambda1/(n1 - 1)$ holds under the conditions that nl represents the refractive index of diffractive optical element L1 for wavelength $\lambda1$, d1 represents a depth of the step portion in the optical axis direction in the first diffractive structure 10, M1 represents the number of discontinuous portions (integer), d2 represents a depth of the step portion in the optical axis direction in the second diffractive structure 20, and M2 represents the number of discontinuous portions (integer).

When the first light flux with wavelength $\lambda1$ and the second light flux with wavelength $\lambda2$ enter the first diffractive structure 10 wherein depth d1 of the step portion in the optical axis direction and number M1 of discontinuous portions are established so that they may satisfy the above-mentioned ranges, there is generated an optical path difference that is substantially a multiple of an integer of $\lambda1$ (μm) and $\lambda2$ (μm) between adjoining stair-structures, and neither the first light flux nor the second light flux is given a phase difference substantially. Therefore, the light fluxes are transmitted as they are without being diffracted to arrive at light converging element L2 (this is called "0-order diffracted light").

For recording and reproducing of information for CD, a light flux having passed through the first area AREA1 among the third light flux is used. Therefore, the third light flux having passed through the second area AREA2 where the first diffractive structure 10 is provided is unwanted light. Therefore, the diffractive actions are given by the first diffractive structure 10 so that the third light flux having passed through the first diffractive structure 10 may not be converged on information recording surface RL3, and thereby, the diffracted light having relatively high diffraction efficiency (for example, 30% or more) among diffracted light with different order generated is made to be a flare. Incidentally, there are some cases where a plurality of diffracted light (for example, +1 order diffracted light and -1 order diffracted light) have the same diffraction efficiency (for example, approx. 40%). In this case, all plural diffracted light having high diffraction efficiency or diffracted light which is feared to be converged on information recording surface RL3 of CD is made to be a flare.

Further, when the first light flux with wavelength $\lambda1$ enters the second diffractive structure 20 wherein depth d2 of the step portion in the optical axis direction and number M2 of discontinuous portions are established so that they may satisfy the above-mentioned ranges, there is generated an optical path difference that is substantially a multiple of an integer of λ1 (μm) between adjoining stair-structures, and the first light flux is not given a phase difference substantially. Therefore, the light flux is transmitted as it is as 0-order diffracted light to arrive at light converging element L2.

Further, for recording and reproducing of information for DVD and CD, the second light flux and the third light flux having passed through the third area AREA3 where the second diffractive structure 20 is provided are made to be unwanted light. Therefore, the diffractive actions are given by the second diffractive structure 20 so that the second light flux and the third light flux having passed through the second diffractive structure 20 may not be converged on information recording surfaces RL2 and RL3 of DVD and CD respectively, and thereby, the diffracted light having relatively high diffraction efficiency (for example, 30% or more) among diffracted light with different order generated is made to be a flare. Incidentally, there are some cases where a plurality of diffracted light (for example, +1 order diffracted light and -1 order diffracted light) have the same diffraction efficiency (for example, approx. 40%). In this case, all plural diffracted light having high diffraction efficiency or diffracted light which is feared to be converged on information recording surfaces RL2 and RL3 of DVD and CD are made to be a flare.

Incidentally, the first - the third light fluxes are not diffracted in the first area AREA1, and pass through it as it is.

Then, the first - third light fluxes having passed through the first area AREA1 pass through diffractive optical element L1, then, receive refractive actions in the light converging element L2, and form converged spots respectively on information recording surfaces of prescribed optical discs.

Further, the first and the second light fluxes having passed through the second area AREA2 pass through diffractive optical element L1, then, receive refractive actions in the light converging element L2, and form converged spots respectively on information recording surfaces of prescribed optical discs.

Further, the first light flux having passed through the third area AREA3 passes through diffractive optical element L1, then, receive refractive actions in the light converging element L2, and forms converged spot on information recording surface RL1 of high density optical disc.

In the present embodiment of diffractive optical element L1, the optical surface S1 (surface of incidence) thereof on the semiconductor laser light source side is divided into the first area AREA1 - the third area AREA3, and the first diffractive structure 10 is formed on the second area AREA2, while the second diffractive structure 20 is formed on the third area AREA3. However, it is also possible to divide the surface of incidence S1 into the first area AREAL and the second area AREA2 and to form the first diffractive structure 10 on the second area AREA2 and form the third area AREA3 on the optical surface S2 (surface of emergence) and to form the second diffractive structure 20 on the third area AREA3, as shown in Fig. 6, without being limited to the foregoing.

When providing the first diffractive structure 10 and the second diffractive structure 20 on different optical surfaces respectively, it is preferable that depth d1 of the step portion in the optical axis direction in the first diffractive structure 10, number M1 (integer) of discontinuous portions, depth d2 of the step portion in the optical axis direction in the second diffractive structure 20, and number M2 (integer) of discontinuous portions, are within the ranges of

$$4.8 \times d \leq d1 \leq 5.2 \times d, \ 2 \leq M1 \leq 4,$$

$$0.9 \times d \leq d2 \leq 1.1 \times d \ \text{and} \ M2 = 2.$$

As shown in the present embodiment, by providing the second area AREA2 on which the first diffractive structure 10 is formed and the third area AREA3 on which the second diffractive structure 20 is formed on the same optical surface (for example, surface of incidence) of the diffractive optical element L1, it is possible to provide separately the structure for correcting chromatic aberration caused by a wavelength difference between light fluxes and the structure for correcting spherical aberration changes caused by temperature changes, on the side of the surface of emergence.

In the optical pickup apparatus PU1 shown in the present embodiment, the first diffractive structure 10 is formed on the second area AREA2 corresponding to NA2, then, the second diffractive structure 20 is provided on the area corresponding to the inside of NA1 and the third light flux passing through the first diffractive structure 10 and the second diffractive structure 20 is made to be a flare component that does not contribute to formation of a spot on information recording surface RL3 of CD, which can make objective optical element OBJ to have an aperture regulating function relating to NA3.

Further, the second light flux passing through the second diffractive structure 20 is made to be a flare component that does not contribute to formation of a spot on information recording surface RL2 of DVD, which can make objective optical element OBJ to have an aperture regulating function relating to NA2.

Therefore, in the optical pickup apparatus having compatibility for three types of optical discs, it is not necessary to use a dichroic filter or a liquid crystal phase control element, for example, as an aperture regulating means, thus, it is possible to keep a manufacturing cost for optical pickup apparatuss down.

(Second Embodiment)

The structure of the optical pickup apparatus in the present embodiment is substantially the same as that in the First Embodiment except the structure of diffractive optical element L1 which, therefore, will be explained as follows.
Surface of incidence Sl of the diffractive optical element L1 is divided into first area AREAL which is in a form of concentric circles each having its center on optical axis L corresponding to an area within NA3, and includes the optical axis L and is provided with first diffractive structure 10, second area AREA2 which is in a form of concentric circles each having its center on optical axis L corresponding to an area within NA2, and is formed on an area outside the fist area AREAL and is provided with second diffractive structure 20, and third area AREA3 which is in a form of concentric circles each having its center on optical axis L corresponding to an area within NA1, and is formed on an area outside the fist area AREA1.
The second area AREA2 is further divided into 2A area that is in a form of concentric circles each having its center on optical axis L and is closer to the optical axis L and 2B area that is farther from the optical axis, and a form of the second diffractive structure 20 formed on the 2A area and a form of the second diffractive structure 20 formed on the 2B area are designed to be different each other.
Specifically, diffractive structure HOE as shown schematically in each of Fig. 3 (a) and Fig. 3 (b) is formed as each of the first diffractive structure 10 and the second diffractive structure 20, and when $d = \lambda 1/(n1 - 1)$ holds under the conditions that nl represents the refractive index of diffractive optical element L1 for wavelength $\lambda 1$, d1 represents a depth of the step portion in the optical axis direction in the first diffractive structure 10, M1 (integer) represents the number of discontinuous portions, d2 represents a depth of the step portion in the optical axis direction in the second diffractive structure 20, and M2 (integer) represents the number of discontinuous portions, level differences d1 and d2 and numbers of discontinuous portions M1 and M2 are established so that

$$1.9 \text{ x d} \leq d1 \leq 2.1 \text{ x d}, 4 \leq M1 \leq 6$$

$$0.9 \text{ x d} \leq d2 \leq 1.1 \text{ x d}, 2 \leq M2 \leq 5$$

may be satisfied, and M1 is 5, M2 in the 2A area is 3 and M2 in the 2B area is 5, as shown in Fig. 7.
When the first light flux with wavelength $\lambda 1$ and the third light flux with wavelength $\lambda 3$ enter the first diffractive structure 10 wherein depth d1 of the step portion in the optical axis direction and number M1 of discontinuous portions are established so that they may satisfy the above-mentioned ranges, there is generated an optical path difference that is substantially a multiple of an integer of $\lambda 1$ ($\mu$m) and $\lambda 3$ ($\mu$m) between adjoining stair-structures, and neither the first light flux nor the third light flux is given a phase difference substantially. Therefore, the light fluxes are transmitted as they are as a zero-order diffracted light without being diffracted to arrive at light converging element L2.
On another hand, when the second light flux with wavelength $\lambda 2$ enters the first diffractive structure 10, the second light flux is diffracted by the optical path difference generated between adjoining stair-structures, and the diffracted light having the highest diffraction efficiency among the second light fluxes is converged on an information recording surface of DVD.
When the first light flux with wavelength $\lambda 1$ enters the second diffractive structure 20 wherein depth d2 of the step portion in the optical axis direction and number M2 of discontinuous portions are established so that they may satisfy the above-mentioned ranges, there is generated an optical path difference that is substantially a multiple of an integer of $\lambda 1$ ($\mu$m) and the first light flux is given a phase difference substantially. Therefore, the light flux is transmitted as it is as a zero-order diffracted light to arrive at light converging element L2.
On another hand, when the second light flux with wavelength $\lambda 2$ and the third light flux with wavelength $\lambda 3$ enter the second diffractive structure 20, the second light flux and the third light flux are diffracted by the optical path difference generated between adjoining stair-structures, and the diffracted light having the highest diffraction efficiency among the second light fluxes is converged on information recording surface RL of DVD, and the diffracted light of the third light flux is made to be a flare so that it may not be converged on information recording surface RL3 of CD.
Incidentally, the second light flux and the third light flux among the first - third light fluxes passing though the third area AREA3 are subjected to refraction actions by the light converging element L2 and thereby, are made to be a flare so that both of them may not be converged respectively on prescribed optical discs.
Then, the first light flux - the third light flux having passed through the first area AREA1 pass through diffractive optical element L1, and then, are given refraction actions in the light converging element L2, and form respectively converged spots on information recording surfaces of prescribed optical discs.

Further, the first light flux and the second light flux having passed through the second area AREA2 pass through diffractive optical element L1, and then, are given refraction actions in the light converging element L2, and form respectively converged spots on information recording surfaces of prescribed optical discs.

Further, the first light flux having passed through the third area AREA3 passes through diffractive optical element L1, and then, is given refraction actions in the light converging element L2, and forms a converged spot on information recording surface RL1 of high density optical disc HD.

In the optical pickup apparatus shown in the present embodiment, the first diffractive structure 10 is formed on the first area AREA1 corresponding to NA3, then, the second diffractive structure 20 is provided on the area corresponding to the inside of NA2 and the third light flux passing through the first diffractive structure 10 and the second diffractive structure 20 is made to be a flare component that does not contribute to formation of a spot on information recording surface RL3 of CD, which can make objective optical element OBJ to have an aperture regulating function relating to NA3.

Further, the second light flux passing through the third area AREA3 is made to be a flare component that does not contribute to formation of a spot on information recording surface RL2 of DVD, which can make objective optical element OBJ to have an aperture regulating function relating to NA2.

Therefore, in the optical pickup apparatus having compatibility for three types of optical discs, it is not necessary to use a dichroic filter or a liquid crystal phase control element, for example, as an aperture regulating means, thus, it is possible to keep a manufacturing cost for optical pickup apparatuss down.

The second area AREA2 is divided into two areas including 2A area and 2B area, and a form of second diffractive structure 20 formed in the 2A area and a form of second diffractive structure 20 formed in the 2B area are designed to be different each other. Due to this, longitudinal spherical aberration of the third light flux from the first area AREAL to the 2A area can be made to be discontinuous, thus, it is possible to improve accuracy of detection for a reflected light of the third light flux in second photodetector PD2.

Incidentally, the 2A area may also be provided on the surface of emergence S2 side, and even in this case, longitudinal spherical aberration of the third light flux from the first area AREAL to the 2A area can be made to be discontinuous, and it is possible to improve accuracy of detection for a reflected light of the third light flux in second photodetector PD2.

Incidentally, the structure of the optical pickup apparatus is not limited to one shown in Fig. 1, and it can be modified freely to, for example, the structure shown in Fig. 8.

Optical pickup apparatus PU2 shown in Fig. 8 is composed of laser module LM1 for high density optical disc HD and DVD composed of first light-emitting point EP1 (first light source) that emits a laser light flux (first light flux) with wavelength of 408 nm emitted when conducting recording and reproducing of information for high density optical disc HD, second light-emitting point EP2 (first light source) that emits a laser light flux (second light flux) with wavelength of 658 nm emitted when conducting recording and reproducing of information for DVD, first light-receiving section DS1 that receives a reflected light flux coming from information recording surface RL1 of high density optical disc HD, second light-receiving section DS2 that receives a reflected light flux coming from information recording surface RL2 of DVD and prism PS, module MD1 for CD wherein infrared semiconductor laser LD3 (third light source) that emits a laser light flux (third light flux) with wavelength of 785 nm emitted when conducting recording and reproducing of information for CD and photodetector PD3 are united solidly, objective optical system OBJ that is composed of aberration correcting element L1 on which a diffractive structure as a phase structure is formed on an optical surface and of light converging element L2 having aspheric surfaces on both sides and having functions to converge a laser light flux having been transmitted through the aberration correcting element L1 on each of information recording surfaces RL1, RL2 and RL3, biaxial actuator AC1, uniaxial actuator AC2, diaphragm STO corresponding to numerical aperture NA1 of high density optical disc HD, polarization beam splitter BS, collimator lens COL, coupling lens CUL and beam shaping element SH.

In the present embodiment stated above, a diffractive optical element is made to be one constituting a part of an objective optical element. However, the diffractive optical element can also be arranged to be separate from the objective optical element, without being limited to the foregoing.

Further, in the present embodiment stated above, it has been considered preferable that an optical surface (surface of incidence S1 and surface of emergence S2) of diffractive optical element L1 is in a form of a plane, and depth d1 and d2 of the step portions in the optical axis direction are within the above-mentioned ranges when the first diffractive structure 10 and the second diffractive structure 20 are formed on an optical surface in a form of a plane. However, it is also possible to form the first diffractive structure 10 and the second diffractive structure 20 on an optical surface which is in a form of a spherical surface or an aspheric surface, as stated above, and when an optical surface of the diffractive optical element L1 is inclined at the prescribed angle or more (for example, 10° or more) from incident light, for example, it is preferable to design so that an optical path length of the light flux entering the first diffractive structure 10 and the second diffractive structure 20 is within the-aforementioned range concerning d1 and d2.

**EXAMPLE**

Next, Example 1 will be explained as follows.

In the present example, an optical pickup apparatus shown in Fig. 1 is used to divide a surface of incidence (first surface) of the diffractive optical element shown in Fig. 6 into first area AREA1 (height h from an optical axis satisfying 0.00 mm ≤ h < 1.27 mm) and second area AREA2 (1.27 mm ≤ h), and the first diffractive structure is formed on the second area AREA2, third area AREA3 (1.635 mm ≤ h) is provided on a surface of emergence (second surface) of the diffractive optical element, and the second diffractive structure is formed on the third area AREA3. Incidentally, the first area AREA1 is a refracting interface.

As each of the first diffractive structure and the second diffractive structure, there is formed diffractive structure HOE wherein ring-shaped zones in a form of concentric circles each having its center on an optical axis having therein a stairs-structure composed of step portions and discontinuous portions in prescribed quantity as shown schematically in Figs, 3 (a) and 3 (b) are formed periodically.

Table 1-1

Example 1
Focal length            $f_1$=2.30mm      $f_2$=2.37mm      $f_3$=2.38mm
Numerical aperture      NA1=0.85          NA2=0.65          NA3=0.50
Imaging magnification   m=0               m=-1/13.25        m=-1/8.14

| $i^{th}$ surface | ri | di (407nm) | ni (407nm) | di (655nm) | ni (655nm) | di (785nm) | ni (785nm) | |
|---|---|---|---|---|---|---|---|---|
| 0 | | ∞ | | 32.60744 | | 20.64962 | | |
| 1 | ∞ | 1.00000 | 1.52994 | 1.00000 | 1.51436 | 1.00000 | 1.5111 | Diffraction surface |
| 2 | ∞ | 0.10000 | 1.00000 | 0.10000 | 1.00000 | 0.10000 | 1.0000 | Diffraction surface |
| 3 | 1.58727 | 2.50000 | 1.62417 | 2.50000 | 1.60423 | 2.50000 | 1.6002 | Aspheric surface |
| 4 | -5.93291 | 0.84612 | 1.00000 | 0.76461 | 1.00000 | 0.51117 | 1.0000 | Aspheric surface |
| 5 | ∞ | 0.10000 | 1.61869 | 0.60000 | 1.57721 | 1.20000 | 1.5704 | |
| 6 | ∞ | | | | | | | |

* The symbol di represents a displacement from $i^{th}$ surface to $(i + 1)^{th}$ surface.

EP 1 564 731 A2

Table 1-2

| Diffraction data | | | |
|---|---|---|---|
| First surface | 0.0mm ≤ h < 1.27mm<br><br>No diffraction surface | | |
| | 1.27mm ≤ h<br>Coefficient of optical path difference function B2 4.58000E+00 | * Number of discontinuous portions of each diffractive ring-shaped zone = 2<br><br>Amount of level difference nm = 5 x 407/0.53 nm<br><br>(Amount of level difference provided with optical path difference of 5 x wavelength 407 nm) | |
| Second surface | 0.0mm ≤ h < 1.635mm<br><br>No diffraction surface | | |
| | 1.635mm ≤ h Coefficient of optical path difference function B2 4. 58000E+00 | * Number of discontinuous portions of each diffractive ring-shaped zone = 2<br><br>Amount of level difference = 4 x 407/0.53 nm<br><br>(Amount of level difference provided with optical path difference of 2 x wavelength 407 nm) | |
| Aspheric surface data | | | |
| Third surface | Aspheric surface coefficient<br><br>$\kappa$ -6.70012E-01<br><br>A4 8.07946E-03<br><br>A6 6.72041E-04<br><br>A8 -4.91558E-05<br><br>A10 3.14894E-04<br><br>A12 -9.03986E-05<br><br>A14 -7.00670E-06<br><br>A16 1.10458E-05<br><br>A18 -1.80902E-06 | | |
| Fourth surface | Aspheric surface coefficient<br><br>$\kappa$ -2.56348E+02<br><br>A4 3.05938E-02<br><br>A6 -1.26555E-03<br><br>A8 -8.74183E-03<br><br>A10 3.51990E-03<br><br>A12 -3.84247E-04<br><br>A14 -1.98538E-05 | | |

In Tables 1-1 and 1-2, ri represents a radius of curvature, di represents a displacement from ith surface to (i + 1)th surface, and ni represents a refractive index of each surface.

As shown in Tables 1-1 and 1-2, focal length $f_1$ in the case where wavelength λ1 emitted from the first light source is 407 nm is set to 2.30 mm, image-side numerical aperture NA1 is set to 0.85, and imaging magnification m is set to 0, focal length $f_2$ in the case where wavelength $\lambda 2$ emitted from the second light source is 655 nm is set to 2.37 mm, image-side numerical aperture NA2 is set to 0.65, and imaging magnification m is set to -1/13.25, and focal length $f_3$ in the case where wavelength $\lambda 3$ emitted from the third light source is 785 nm is set to 2.38 mm, image-side numerical aperture NA3 is set to 0.50, and imaging magnification m is set to -1/8.14, in the optical pickup apparatus of the present example.

Further, number M1 of discontinuous portions in the first diffractive structure is 2, and number M2 of discontinuous portions in the second diffractive structure is 2.

Each of a surface of incidence (first surface) and a surface of emergence (second surface) of the diffractive optical element and a surface of incidence (third surface) and a surface of emergence (fourth surface) of the light converging element is formed to be an aspheric surface that is stipulated by a numerical expression wherein a coefficient shown in Tables 1-1 and 1-2 is substituted respectively in Numeral 1, and is rotationally symmetrical on the optical axis.

$$\text{(Numeral 1)}$$

$$X(h) = \frac{(h^2/R)}{1+\sqrt{1-(1+\kappa)(h/R)^2}} + \sum_{i=0}^{9} A_{2i} h^{2i}$$

In the expression above, X (h) represents an axis in the optical axis direction (traveling direction of light is positive), $\kappa$ represents a conic constant and $A_{2i}$ represents a coefficient of aspheric surface.

An optical path length given to each light flux having each wavelength by each of the first diffractive structure and the second diffractive structure is stipulated by a numerical expression wherein a coefficient shown in Tables 1-1 and 1-2 is substituted in the optical path difference function of Numeral 2.

$$\text{(Numeral 2)}$$

$$\Phi(h) = \sum_{i=0}^{5} B_{2i} h^{2i}$$

In the expression above, $B_{2i}$ represents a coefficient of the optical path difference function.

Depth d1 of the step portion in the optical axis direction in the first diffractive structure is established so that an optical path difference equivalent to $\lambda 1$ x 5 wavelength may be given, and due to this, an optical path difference equivalent to about 3 wavelengths is given to the second light flux with wavelength $\lambda 2$, but, an amount of change of phase is less for the first light flux with wavelength $\lambda 1$ and the second light flux with wavelength $\lambda 2$, and diffraction actions are not generated. Only for the third light flux with wavelength $\lambda 3$, a phase difference equivalent to about 0.5 wavelengths ($\pi$) is given, and diffraction actions are generated.

Depth d2 of the step portion in the optical axis direction in the second diffractive structure is established so that an optical path difference equivalent to $\lambda 1$ x 4 wavelength may be given, and due to this, an optical path difference equivalent to about 2 wavelengths is given to the second light flux, but, an amount of change of phase is less for the first light flux and the third light flux, and diffraction actions are not generated. Only for the second light flux, a phase difference equivalent to about 0.5 wavelengths ($\pi$) is given, and diffraction actions are generated.

Fig. 9 shows longitudinal spherical aberration diagrams respectively for the first light flux (BD), the second light flux (DVD) and the third light flux (CD).

Fig. 9 shows that longitudinal spherical aberration is controlled in the necessary numerical aperture for all of the first - third light fluxes, and longitudinal spherical aberration is discontinuous in an area where a height from the optical axis exceeds the necessary numerical aperture and the objective optical system has an excellent aperture regulating function for the second and the third light fluxes.

Next, Example 2 will be explained as follows.

In the present example, an optical pickup apparatus shown in Fig. 1 is used to divide a surface of incidence (first surface) of the diffractive optical element shown in Fig. 7 into the first area AREA1 (0.00 mm $\leq$ h < 1.17 mm), the 2A$^{th}$ area (1.17 mm $\leq$ h < 1.44 mm), the 2B$^{th}$ area (1.44 mm $\leq$ h < 1.54 mm) and the third area AREA3 (1.54 mm $\leq$ h), and the first diffractive structure is formed on the first area AREA1 and the second diffractive structure is formed on each of the 2A$^{th}$ and the 2B$^{th}$ areas. Incidentally, the third area AREA3 is a refracting interface. Further, each of the surface of incidence and the surface of emergence of the diffractive optical element is in a shape of a flat surface.

As each of the first diffractive structure and the second diffractive structure, there is formed diffractive structure HOE wherein ring-shaped zones in a form of concentric circles each having its center on an optical axis having therein a stairs-structure composed of step portions and discontinuous portions in prescribed quantity as shown schematically in Figs, 3 (a) and 3 (b) are formed periodically.

Lens data are shown in Tables 2-1 and 2-2.

## Table 2-1

Example 2
Focal length         $f_1=2.30$mm    $f_2=2.37$mm    $f_3=2.38$mm
Numerical aperture   NA1=0.85     NA2=0.65     NA3=0.45
Imaging magnification  m=0           m=0           m=−1/8.14

| $i^{th}$ surface | ri | di (407nm) | ni (407nm) | di (655nm) | ni (655nm) | di (785nm) | ni (785nm) | |
|---|---|---|---|---|---|---|---|---|
| 0 | | ∞ | | ∞ | | 20.40952 | | |
| 1 | ∞ | 1.00000 | 1.52994 | 1.00000 | 1.51436 | 1.00000 | 1.5111 | Diffraction surface |
| 2 | ∞ | 0.10000 | 1.00000 | 0.10000 | 1.00000 | 0.10000 | 1.0000 | Diffraction surface |
| 3 | 1.58727 | 2.50000 | 1.62417 | 2.50000 | 1.60423 | 2.50000 | 1.6002 | Aspheric surface |
| 4 | −5.93291 | 0.84612 | 1.00000 | 0.58350 | 1.00000 | 0.51456 | 1.0000 | Aspheric surface |
| 5 | ∞ | 0.10000 | 1.61869 | 0.60000 | 1.57721 | 1.20000 | 1.5704 | |
| 6 | ∞ | | | | | | | |

* The symbol di represents a displacement from $i^{th}$ surface to $(i + 1)^{th}$ surface.

Table 2-2

| Diffraction data | | |
|---|---|---|
| First surface | 0.0mm ≤ h < 1.17mm<br>Coefficient of optical path difference function<br>B4 -5.4454E-04<br>B6 -6.1686E-05<br>B8 -1.4718E-05 | * Number of discontinuous portions of each diffractive ring-shaped zone = 5<br>Amount of level difference = 2 x 407/0.53 nm<br>(Amount of level difference provided with optical path difference of 2 x wavelength 407 nm) . |
| | 1.17mm ≤ h < 1.44mm<br>Coefficient of optical path difference function<br>B4 -5.4454E-04<br>B6 -6.1686E-05<br>B8 -1.4718E-05 | * Number of discontinuous portions of each diffractive ring-shaped zone = 3<br>Amount of level difference = 1 x 407/0.53 nm<br>(Amount of level difference provided with optical path difference of 1 x wavelength 407 nm) |
| | 1.44mm ≤ h < 1.54mm<br>Coefficient of optical path difference function<br>B4 -5.4454E-04<br>B6 -6.1686E-05<br>B8 -1.4718E-05 | * Number of discontinuous portions of each diffractive ring-shaped zone = 5<br>Amount of level difference = 2 x 407/0.53 nm<br>(Amount of level difference provided with optical path difference of 2 x wavelength 407 nm) |
| | 1.54mm ≤ h No diffraction surface | |
| Aspheric surface data | | |
| Third A8 surface | Aspheric surface coefficient<br>$\kappa$ -6.70012E-01<br>A4 8.07946E-03<br>A6 6.72041E-04<br>-4.91558E-05<br>A10 3.14894E-04<br>A12 -9.03986E-05<br>A14 -7.00670E-06<br>A16 1.10458E-05<br>A18 -1.80902E-06 | |
| Fourth surface | Aspheric surface coefficient<br>$\kappa$ -2.56348E+02<br>A4 3.05938E-02<br>A6 -1.26555E-03<br>A8 -8.74183E-03<br>A10 3.51990E-03<br>A12 -3.84247E-04<br>A14 -1.98538E-05 | |

As shown in Tables 2-1 and 2-2, focal length $f_1$ in the case where wavelength $\lambda$1 emitted from the first light source is 407 nm is set to 2.30 mm, image-side numerical aperture NA1 is set to 0.85, and imaging magnification m is set to 0, focal length $f_2$ in the case where wavelength $\lambda$2 emitted from the second light source is 655 nm is set to 2.37 mm, image-side numerical aperture NA2 is set to 0.85, and imaging magnification m is set to 0, and focal length $f_3$ in the case where wavelength $\lambda$3 emitted from the third light source is 785 nm is set to 2.38 mm, image-side numerical aperture NA3 is set to 0.45, and imaging magnification m is set to - 1/8.14, in the optical pickup apparatus of the present example.

Further, number M1 of discontinuous portions in the first diffractive structure is 5, number M2 of discontinuous portions in the 2A area among the second diffractive structure is 2, and number M2 of discontinuous portions in the 2B area is 5.

Each of a surface of incidence (third surface) and a surface of emergence (fourth surface) of the light converging element is formed to be an aspheric surface that is stipulated by a numerical expression wherein a coefficient shown in Tables 2-1 and 2-2 is substituted respectively in Numeral 1, and is rotationally symmetrical on the optical axis.

An optical path length given to each light flux having each wavelength by each of the first diffractive structure and the second diffractive structure is stipulated by a numerical expression wherein a coefficient shown in Tables 2-1 and 2-2 is substituted in the optical path difference function of Numeral 2.

Depth d1 of the step portion in the optical axis direction in the first diffractive structure is established so that an optical path difference equivalent to $\lambda$1 x 2 wavelength may be given, and due to this, an optical path difference equivalent to about 1 wavelength is given to the third light flux, thus, an amount of change of phase is less for the first light flux and the third light flux, and diffraction actions are not generated. Only for the second light flux, a phase difference equivalent to about 0.2 wavelengths (0.4$\pi$) is given, and diffraction actions are generated.

Depth d2 of the step portion in the optical axis direction in the second diffractive structure in the 2A area is established so that an optical path difference equivalent to $\lambda$1 x 1 wavelength may be given, and due to this, a phase of the first light flux remains unchanged, and diffraction actions are not generated. For the second light flux, a phase difference equivalent to about 0.4 wavelengths (0.8$\pi$) is given, and for the third light flux, a phase difference equivalent to about 0.5 wavelengths ($\pi$) is given, and diffraction actions are generated.

Further, depth d2 of the step portion in the optical axis direction in the second diffractive structure 20 in the 2B area is established so that an optical path difference equivalent to $\lambda$1 x 2 wavelength may be given, and due to this, an optical path difference equivalent to about 1 wavelength is given to the third light flux, thus, phases of the first light flux and the third light flux remain unchanged, and diffraction actions are not generated. For the second light flux, a phase difference equivalent to about 0.2 wavelengths (0.4$\pi$) is given, and diffraction actions are generated.

Fig. 10 shows longitudinal spherical aberration diagrams respectively for the first light flux (BD), the second light flux (DVD) and the third light flux (CD).

Fig. 10 shows that longitudinal spherical aberration is controlled in the necessary numerical aperture for all of the first - third light fluxes, and longitudinal spherical aberration is discontinuous in an area where a height from the optical axis exceeds the necessary numerical aperture and the objective optical system has an excellent aperture regulating function for the second and the third light fluxes.

Next, Example 3 will be explained as follows.

In the present example, an optical pickup apparatus shown in Fig. 1 is used to divide a surface of incidence (first surface) of the diffractive optical element shown in Fig. 11 into the first area AREA1 (0.00 mm $\leq$ h < 1.644 mm), the second area AREA2 (1.644 mm $\leq$ h < 1.902 mm), the third area AREA3 (1.902 mm $\leq$ h), and the first diffractive structure 10 is formed on the second area AREA2 and the second diffractive structure 20 is formed on the third area. Incidentally, the first area AREA1 is a refracting interface.

As each of the first diffractive structure and the second diffractive structure, there is formed diffractive structure HOE wherein ring-shaped zones in a form of concentric circles each having its center on an optical axis having therein a stairs-structure composed of step portions and discontinuous portions in prescribed quantity as shown schematically in Figs, 3 (a) and 3 (b) are formed periodically.

Lens data are shown in Tables 3-1 and 3-2.

EP 1 564 731 A2

Table 3-1

Example 3
Focal length          $f_1$=3.05mm    $f_2$=3.16m     $f_3$=3.17mm
Numerical aperture    NA1=0.65      NA2=0.65    NA3=0.50
Imaging magnification  m=1/82.64    m=-1/166.28 m=-1/17.27

| $i^{th}$ sur-face | ri | di (407nm) | ni (407nm) | di (655nm) | ni (655nm) | di (785nm) | ni (785nm) | |
|---|---|---|---|---|---|---|---|---|
| 0 | | -250.00 | | 369.95 | | 56.80 | | |
| 1 | $\infty$ | 0.80000 | 1.52491 | 1.00000 | 1.50673 | 1.00000 | 1.5035 | Diffraction surface |
| 2 | $\infty$ | 0.10000 | 1.00000 | 0.10000 | 1.00000 | 0.10000 | 1.0000 | |
| 3 | 1.92607 | 1.87000 | 1.56013 | 1.87000 | 1.54073 | 1.87000 | 1.5372 | Aspheric surface |
| 4 | -9.84753 | 1.57967 | 1.00000 | 1.72623 | 1.00000 | 0.51746 | 1.0000 | Aspheric surface |
| 5 | $\infty$ | 0.60000 | 1.61949 | 0.60000 | 1.57721 | 1.20000 | 1.5704 | |
| 6 | $\infty$ | | | | | | | |

* The symbol di represents a displacement from $i^{th}$ surface to $(i + 1)^{th}$ surface.

Table 3-2

| Diffraction data | | | |
|---|---|---|---|
| First surface | 0.0mm ≤ h < 1.644mm<br><br>No diffraction surface | | |
| | 1.644mm ≤ h <1.902mm<br><br>Coefficient of optical path difference function<br><br>B4 -9.5828E-01 | * Number of discontinuous portions of each diffractive ring-shaped zone = 2 |
| | | Amount of level difference = 3 x 407/0.525 nm |
| | | (Amount of level difference provided with optical path difference of 1 x wavelength 407 nm) |
| | 1.902mm ≤ h<br><br>Coefficient of optical path difference function<br><br>B4 -9.5828E-01 | * Number of discontinuous portions of each diffractive ring-shaped zone = 3 |
| | | Amount of level difference = 1 x 655/0.507 nm |
| | | (Amount of level difference provided with optical path difference of 1 x wavelength 655 nm) |
| Aspheric surface data | | | |
| Third surface | Aspheric surface coefficient<br><br>$\kappa$ -0.766990<br><br>A4 4.96273E-03<br><br>A6 6.18596E-04<br><br>A8 -1.30980E-05<br><br>A10 2.12263E-05<br><br>A12 -2.29629E-06 | |
| Fourth surface A4 | Aspheric surface coefficient<br><br>$\kappa$ -4.51771E+01<br><br>9.72492E-03<br><br>A6 -2.00947E-03<br><br>A8 2.33032E-04<br><br>A10 -1.32931E-05 | |

As shown in Tables 3-1 and 3-2, focal length $f_1$ in the case where wavelength $\lambda1$ emitted from the first light source is 407 nm is set to 3.05 mm, image-side numerical aperture NA1 is set to 0.65, and imaging magnification m is set to 1/82.64, focal length $f_2$ in the case where wavelength $\lambda2$ emitted from the second light source is 655 nm is set to 3.16 mm, image-side numerical aperture NA2 is set to 0.65, and imaging magnification m is set to -1/166.28, and focal length $f_3$ in the case where wavelength $\lambda3$ emitted from the third light source is 785 nm is set to 3.17 mm, image-side numerical aperture NA3 is set to 0.5, and imaging magnification m-is set to -1/17.27, in the optical pickup apparatus of the present example.

Further, number M1 of discontinuous portions in the first diffractive structure is 2 and number M2 of discontinuous portions in the second diffractive structure is 3.

Each of a surface of incidence (third surface) and a surface of emergence (fourth surface) of the light converging element is formed to be an aspheric surface that is stipulated by a numerical expression wherein a coefficient shown in Tables 3-1 and 3-2 is substituted respectively in Numeral 1, and is rotationally symmetrical on the optical axis.

An optical path length given to each light flux having each wavelength by each of the first diffractive structure and the second diffractive structure is stipulated by a numerical expression wherein a coefficient shown in Tables 3-1 and 3-2 is substituted in the optical path difference function of Numeral 2.

Depth d1 of the step portion in the optical axis direction in the first diffractive structure is established so that an optical path difference equivalent to λ1 x 3 wavelength may be given, and due to this, an optical path difference equivalent to about 2 wavelength is given to the third light flux, thus, an amount of change of phase is less for the first light flux and the third light flux, and diffraction actions are not generated. Only for the second light flux, a phase difference equivalent to about 0.5 wavelengths (n) is given, and diffraction actions are generated.

Depth of the step portion in the optical axis direction in the second diffractive structure in the second area is established so that an optical path difference equivalent to λ2 x 1 wavelength may be given, and due to this, a phase of the second light flux remains unchanged, and diffraction actions are not generated. For the first light flux, a phase difference equivalent to about 0.4 wavelengths (0.8π) is given, and for the third light flux, a phase difference equivalent to about 0.5 wavelengths (π) is given, and diffraction actions are generated.

Fig. 12 shows longitudinal spherical aberration diagrams respectively for the first light flux (HD DVD), the second light flux (DVD) and the third light flux (CD).

Fig. 12 shows that longitudinal spherical aberration is controlled in the necessary numerical aperture for all of the first - third light fluxes, and longitudinal spherical aberration is discontinuous in an area where a height from the optical axis exceeds the necessary numerical aperture and the objective optical system has an excellent aperture regulating function for the second and the third light fluxes.

**Claims**

**1.** An optical pickup apparatus for recording and/or reproducing information on an information recording surface of an optical disk having a protective substrate with a predefined thickness, comprising:

a first light source emitting a first light flux with a wavelength λ1 for information recording and/or reproducing on an optical recording surface of a first optical disk having a protective substrate with a thickness t1;
a second light source emitting a second light flux with a wavelength λ2 (λ2 > λ1) for information recording and/or reproducing on an optical recording surface of a second optical disk having a protective substrate with a thickness t2 (t2 ≥ t1);
a third light source emitting a third light flux with a wavelength λ3 (λ3 > λ2) for information recording and/or reproducing on an optical recording surface of a third optical disk having a protective substrate with a thickness t3 (t3 > t2);
a diffractive optical element for transmitting the first - third light fluxes and;
an objective optical system having a light converging element for converging the first - third light fluxes which have passed the diffractive optical element onto the first - third optical disks respectively,

wherein the diffractive optical element includes
a first area whose center is on an optical axis;
a second area formed in a ring-shape and arranged outside of the first area along,a perpendicular direction to the optical axis, and including a first diffractive structure;
a third area formed in a ring-shape and arranged outside of the second area along a perpendicular direction to the optical axis, and including a second diffractive structure; and
the first area forms the first - third light fluxes passing through the first area and the light converging element into converged spots on the information recording surfaces of the first - third disks respectively,
the second area
forms the first and second light fluxes among the first - third light fluxes passing through the second area and the light converging element into converged spots on the information recording surfaces of the first and second disks respectively, and
does not form the third flux among the first - third light fluxes passing through the second area and the light converging element into a converged spot on the information recording surface of the third disk,
the third area
forms one of the first light flux and the second light flux among the first - third light fluxes passing through the third area and the light converging element into a converged spot on the information recording surface of a corresponding disk between the first and second disk and
does not form the third light flux and another of the first light flux and the second light flux among the first - third light fluxes passing through the third area and the light converging element into converged spots on the information recording surfaces of corresponding disks between the first to third disks.

**2.** The optical pickup apparatus of claim 1,

wherein the diffractive optical element consists of one optical element and one optical surface of the optical element includes the second area and the third area.

3. The optical pickup apparatus of claim 1,
   wherein the diffractive optical element consists of one optical element,
   one optical surface of the optical element includes the second area and
   an opposite optical surface includes the third area.

4. The optical pickup apparatus of any one of claims 1 - 3,
   the first diffractive structure provides a diffractive action to the third light flux passing through the second area, and
   the second diffractive structure provides a diffractive action another of the first light flux and the second light flux passing through the third area.

5. The optical pickup apparatus of any one of claims 1 - 4,
   wherein the first diffractive structure
   comprises a plurality of ring-shaped zones whose centers are on the optical axis and
   does not provide a substantial phase difference for the first light flux and the second light flux passing through the second area,
   each of the plurality of ring-shaped zones of the first diffractive structure comprises a step structure including a predefined number of discontinuous portions and step portions,
   the second diffractive structure
   comprises a plurality of ring-shaped zones whose centers are on the optical axis and
   does not to provide a substantial phase difference to one of the first light flux and the second light flux passing through the third area, and
   each of the plurality of ring-shaped zones of the second diffractive structure comprises a step structure including a predefined number of discontinuous portions and a predefined number of step portions.

6. The optical pickup apparatus of claim 5 satisfying following expressions,

$$4.8 \text{ x d} \leq d1 \leq 5.2 \text{ x d}, 2 \leq M1 \leq 4$$

$$1.9 \text{ x d} \leq d2 \leq 2.1 \text{ x d}, 4 \leq M2 \leq 6$$

where n1 is a refractive index of the diffractive optical element for the wavelength $\lambda1$, d1 is a step depth of the step portion in the first diffractive structure along the optical axis, M1 is an integer and a number of the discontinuous portions in the first diffractive structure, d2 is a step depth of the step portion in the second diffractive structure along the optical axis, M2 is an integer and a number of the discontinuous portions in the second diffractive structure, and d satisfies

$$d = \lambda1 \text{ / } (n1 - 1).$$

7. The optical pickup apparatus of claim 5 satisfying following expressions,

$$4.8 \text{ x d} \leq d1 \leq 5.2 \text{ x d}, 2 \leq M1 \leq 4$$

$$0.9 \text{ x d} \leq d2 \leq 1.1 \text{ x d}, M2 = 2$$

where n1 is a refractive index of the diffractive optical element for the wavelength $\lambda1$, d1 is a step depth of the step portion in the first diffractive structure along the optical axis, M1 is an integer and a number of the discontinuous portions in the first diffractive structure, d2 is a step depth of the step portion in the second diffractive structure along the optical axis, M2 is an integer and a number of the discontinuous portions in the second diffractive structure, and d satisfies

$$d = \lambda 1 / (n1 - 1).$$

**8.** The optical pickup apparatus of any one of claims 4 -7 satisfying following expressions,

$$f1 \times NA1 > f2 \times NA2 > f3 \times NA3$$

where f1, f2 and f3 are focal lengths for the wavelengths $\lambda 1 - \lambda 3$ of the objective lens respectively and NA1, NA2 and N3 are numerical apertures used for recording or producing the first, second and third disks respectively,
wherein the third area provides a diffractive action to the second light flux.

**9.** The optical pickup apparatus of claim 8 satisfying following expressions,

$$0.75 \leq NA1 \leq 0.90$$

$$0.60 \leq NA2 \leq 0.70$$

$$0.43 \leq NA3 \leq 0.55$$

**10.** The optical pickup apparatus of claim 8 satisfying following expressions,

$$0.65 \leq NA1 \leq 0.70$$

$$0.60 \leq NA2 \leq 0.63$$

$$0.43 \leq NA3 \leq 0.55$$

**11.** The optical pickup apparatus of any one of claims 4 - 7 satisfying following expressions,

$$f2 \times NA2 > f1 \times NA1 > f3 \times NA3$$

where f1, f2 and f3 are focal lengths for the wavelengths $\lambda 1 - \lambda 3$ of the objective lens respectively and NA1, NA2 and N3 are numerical apertures used for recording or producing the first, second and third disks respectively,
wherein the third area provides a diffractive action to the first light flux.

**12.** The optical pickup apparatus of claim 11 satisfying following expressions,

$$0.64 \leq NA1 \leq 0.65$$

$$0.64 \leq NA2 \leq 0.70$$

$$0.43 \leq NA3 \leq 0.55$$

**13.** An optical pickup apparatus for recording and/or reproducing information on an information recording surface of an optical disk having a protective substrate with a predefined thickness, comprising:

34

a first light source emitting a first light flux with a wavelength λ1 for information recording and/or reproducing on an optical recording surface of a first optical disk having a protective substrate with a thickness t1;

a second light source emitting a second light flux with a wavelength λ2 (λ2 > λ1) for information recording and/or reproducing on an optical recording surface of a second optical disk having a protective substrate with a thickness t2(t2 ≥ t1);

a third light source emitting a third light flux with a wavelength λ3 (λ3 > λ2) for information recording and/or reproducing on an optical recording surface of a third optical disk having a protective substrate with a thickness t3 (t3 > t2);

a diffractive optical element for transmitting the first - third light fluxes and;

an objective optical system having a light converging element for converging the first - third light fluxes which have passed the diffractive optical element onto the first - third optical disks respectively,

wherein the diffractive optical element includes

a first area whose center is on an optical axis and which includes the a first diffractive structure;

a second area formed in a ring-shape and arranged outside of the first area along a perpendicular direction to the optical axis, and including a second diffractive structure;

a third area formed in a ring-shape and arranged outside of the second area along a perpendicular direction to the optical axis; and

the first area forms the first - third light fluxes passing through the first area and the light converging element into converged spots on the information recording surfaces of the first - third disks respectively,

the second area

forms the first and second light fluxes among the first - third light fluxes passing through the second area and the light converging element into converged spots on the information recording surfaces of the first and second disks respectively and

does not form the third light flux among the first - third light fluxes passing through the second area and the light converging element into a converged spot on the information recording surface of the third disk,

the third area

forms one of the first light flux and the second light flux among the first - third light fluxes passing through the third area and the light converging element into a converged spot on the information recording surface of the corresponding optical disk, and

does not form the third light flux and another of one of the first light flux and the second light flux among the first - third light fluxes passing through the third area and the light converging element into converged spots on the information recording surfaces of the corresponding optical disks.

**14.** The optical pickup apparatus of claim 13,

wherein the diffractive optical element consists of one optical element and one optical surface of the optical element includes the second area and the third area.

**15.** The optical pickup apparatus of claim 13,

wherein the diffractive optical element consists of one optical element,
one optical surface of the optical element includes the second area and
an opposite optical surface includes the third area.

**16.** The optical pickup apparatus of any one of claims 13 - 15,

the first diffractive structure provides a diffractive action.to the second light flux passing through the first area,
the second diffractive structure provides a diffractive action to the second light flux and the third light flux passing through the second area.

**17.** The optical pickup apparatus of any one of claim 13 - 16,

wherein the first diffractive structure

comprises a plurality of ring-shaped zones whose centers are on the optical axis and
does not provide a substantial phase difference for the first light flux and the third light flux passing through the first area,

each of the plurality of ring-shaped zones of the first diffractive structure comprises a step structure including a predefined number of discontinuous portions and.step portions,

the second diffractive structure

comprises a plurality of ring-shaped zones whose centers are on the optical axis and
does not to provide a substantial phase difference for the first light flux passing through the second area, and

each of the plurality of ring-shaped zones comprises a step structure including a predefined number of discontinuous portions and a predefined number of step portions.

18. The optical pickup apparatus of claim 17 satisfying following expressions,

$$1.9 \times d \leq d1 \leq 2.1 \times d, \ 4 \leq M1 \leq 6$$

$$4.8 \times d \leq d2 \leq 5.2 \times d, \ 4 \leq M2 \leq 6$$

where n1 is a refractive index of the diffractive optical element for the wavelength $\lambda1$, d1 is a step depth of the step portion in the first diffractive structure along the optical axis, M1 is an integer and a number of the discontinuous portions in the first diffractive structure, d2 is a step depth of the step portion in the second diffractive structure along the optical axis, M2 is an integer and a number of the discontinuous portions in the second diffractive structure, and d satisfies

$$d = \lambda1 / (n1 - 1).$$

19. The optical pickup apparatus of claim 17 satisfying following expressions,

$$1.9 \times d \leq d1 \leq 2.1 \times d, \ 4 \leq M1 \leq 6$$

$$0.9 \times d \leq d2 \leq 1.1 \times d, \ 2 \leq M2 \leq 5$$

where nl is a refractive index of the diffractive optical element for the wavelength $\lambda1$, d1 is a step depth of the step portion in the first diffractive structure along the optical axis, M1 is an integer and a number of the discontinuous portions in the first diffractive structure, d2 is a step depth of the step portion in the second diffractive structure along the optical axis, M2 is an integer and a number of the discontinuous portions in the second diffractive structure, and d satisfies

$$d = \lambda1 / (n1 - 1).$$

20. The optical pickup apparatus of any one of claims 13 - 19,

wherein the second area is divided into at least two areas including an area 2A which is a concentric circle and whose center is on the optical axis,

a area 2B which is a concentric circle and whose center is on the optical axis, and the area 2A is arranged closer to the optical axis than the area 2B,

the second diffractive structure formed on the area 2A has a different shape from the second diffractive structure formed on the area 2B.

21. The optical pickup apparatus any one of claims 1 - 20 satisfying following expressions,

$$370 \ nm \leq \lambda1 \leq 440 \ nm$$

$$620 \ nm \leq \lambda2 \leq 690 \ nm$$

$$750 \ nm \leq \lambda3 \leq 820 \ nm.$$

22. The optical pickup apparatus of any one of claims 1 - 21,

**EP 1 564 731 A2**

wherein the objective optical system comprises the diffractive optical element.

23. An optical pickup apparatus for recording and/or reproducing information on an information recording surface of an optical disk having a protective substrate with a predefined thickness, comprising:

a first light source emitting a first light flux with a wavelength $\lambda 1$ for information recording and/or reproducing on an optical recording surface of a first optical disk having a protective substrate with a thickness t1;
a second light source emitting a second light flux with a wavelength $\lambda 2$ ($\lambda 2 > \lambda 1$) for information recording and/or reproducing on an optical recording surface of a second optical disk having a protective substrate with a thickness t2(t2 $\geq$ t1);
a third light source emitting a third light flux with a wavelength $\lambda 2$ ($\lambda 3 > \lambda 2$) for information recording and/or reproducing on an optical recording surface of a third optical disk having a protective substrate with a thickness t3 (t3 > t2);
a diffractive optical element for transmitting the first - third light fluxes and;
an objective optical system having a light converging element for converging the first - third light fluxes which have passed the diffractive optical element onto the first - third optical disks respectively,

wherein the diffractive optical element includes
a first area whose center is on an optical axis;
a second area formed in a ring-shape and arranged outside of the first area along a perpendicular direction to the optical axis;
a third area formed in a ring-shape and arranged outside of the second area along a perpendicular direction to the optical axis; and
the first area, the second area and third area have different optical properties each other for the first - third light fluxes,
the third area does not form two light fluxes among the first - third light fluxes passing the third area and the light converging element into converged spots on the information recording surfaces of corresponding disks.

24. The optical pickup apparatus of claim 23,
wherein the optical pickup apparatus satisfies following expressions,

$$370 \text{ nm} \leq \lambda 1 \leq 440 \text{ nm}$$

$$620 \text{ nm} \leq \lambda 2 \leq 690 \text{ nm}$$

$$750 \text{ nm} \leq \lambda 3 \leq 820 \text{ nm}$$

the second area comprises a first diffractive structure having a plurality of ring-shaped zones whose centers are on the optical axis and provides a diffractive action to one of the first - third light fluxes,
each of the plurality of ring-shaped zones of the first diffractive structure comprises a step structure including a predefined number of discontinuous portions and step portions,
the third area comprises a second diffractive structure having a plurality of ring-shaped zones whose centers are on the optical axis, provides a diffractive action to one of the first - third light fluxes and has a different structure from the first diffractive structure,
each of the plurality of ring-shaped zones of the second diffractive structure comprises a step structure including a predefined number of discontinuous portions and step portions, and
the third area does not form the second light flux and the third light flux among the first - third light fluxes passing the third area and the light converging element into converged spots on the information recording surfaces of the second and the third disks.

25. The An optical pickup apparatus of claim 23,
wherein the optical pickup apparatus satisfies following expressions,

$$370 \text{ nm} \leq \lambda 1 \leq 440 \text{ nm}$$

37

$$620 \text{ nm} \leq \lambda2 \leq 690 \text{ nm}$$

$$750 \text{ nm} \leq \lambda3 \leq 820 \text{ nm}$$

the first area comprises a first diffractive structure having a plurality of ring-shaped zones whose centers are on the optical axis and provides a diffractive action to one of the first - third light fluxes,
each of the plurality of ring-shaped zones of the first diffractive structure comprise a step structure including a predefined number of discontinuous portions and step portions,
the second area comprises a second diffractive structure having a plurality of ring-shaped zones whose centers are on the optical axis, provides a diffractive action to one of the first - third light fluxes, and has a different structure from the first diffractive structure,
each of the plurality of ring-shaped zones of the second diffractive structure comprises a step structure including a predefined number of discontinuous portions and step portions, and
the third area does not form the second light flux and the third light flux among the first - third light fluxes passing the third area and the light converging element into converged spots on the information recording surfaces of the second and the third disks.

26. The optical pickup apparatus any one of claims 23 - 25,
wherein the diffractive optical element consists of one optical element and one optical surface of the optical element includes the second area and the third area.

27. The optical pickup apparatus of any one of claims 23 - 25,
wherein the diffractive optical element consists of one optical element,
one optical surface of the optical element includes the second area and
an opposite optical surface includes the third area.

28. The optical pickup apparatus of any one of claims 23 - 27 satisfying following expressions,

$$0.65 \leq NA1 \leq 0.70$$

$$0.60 \leq NA2 \leq 0.63$$

$$0.43 \leq NA3 \leq 0.55$$

where NA1, NA2 and N3 are numerical apertures used for recording or producing the first, second and third disks respectively.

29. The optical pickup apparatus of any one of claims 23 - 27 satisfying following expressions,

$$0.64 \leq NA1 \leq 0.65$$

$$0.64 \leq NA2 \leq 0.70$$

$$0.43 \leq NA3 \leq 0.55$$

where NA1, NA2 and N3 are numerical apertures used for recording or producing the first, second and third disks respectively.

30. A diffractive optical element for use in an optical pickup apparatus for recording and/or reproducing information on an information recording surface of an optical disk with a protective substrate with a predefined thickness,

EP 1 564 731 A2

having:

a first light source emitting a first light flux with a wavelength $\lambda 1$ for information recording and/or reproducing on an optical recording surface of a first optical disk having a protective substrate with a thickness t1;
a second light source emitting a second light flux with a wavelength $\lambda 2$ ($\lambda 2 > \lambda 1$) for information recording and/or reproducing on an optical recording surface of a second optical disk having a protective substrate with a thickness t2(t2 $\geq$ t1);
a third light source emitting a third light flux with a wavelength $\lambda 3$ ($\lambda 3 > \lambda 2$) for information recording and/or reproducing on an optical recording surface of a third optical disk having a protective substrate with a thickness t3 (t3 > t2);
a diffractive optical element for transmitting the first - third light fluxes and;
an objective optical system having a light converging element for converging the first - third light fluxes which have passed the diffractive optical element onto the first - third optical disks respectively,
the diffractive optical element comprising:

a first area whose center is on an optical axis;
a second area formed in a ring-shape and arranged outside of the first area along a perpendicular direction to the optical axis, and including a first diffractive structure;
a third area formed in a ring-shape and arranged outside of the second area along a perpendicular direction to the optical axis, and including a second diffractive structure; and
the first area forms the first - third light fluxes passing through the first area and the light converging element into converged spots on the information recording surfaces of the first - third disks respectively, the second area
forms the first and second light fluxes among the first - third light fluxes passing through the second area and the light converging element into converged spots on the information recording surfaces of the first and second disks respectively, and
does not form the third flux among the first - third light fluxes passing through the second area and the light converging element into a converged spot on the information recording surface of the third disk, the third area
forms one of the first light flux and the second light flux among the first - third light fluxes passing through the third area and the light converging element into a converged spot on the information recording surface of a corresponding disk.between the first and second disk and
does not form the third light flux and another of the first light flux and the second light flux among the first - third light fluxes passing through the third area and the light converging element into converged spots on the information recording surfaces of corresponding disks between the first to third disks.

31. The diffractive optical element of claim 30,
wherein the diffractive optical element consists of one optical element and one optical surface of the optical element includes the second area and the third area.

32. The diffractive optical element of claim 30,
wherein the diffractive optical element consists of one optical element,
one optical surface of the optical element includes the second area and
an opposite optical surface includes the third area.

33. The diffractive optical element of any one of claims 30 - 32,
the first diffractive structure provides a diffractive action to the third light flux passing through the second area, and
the second diffractive structure provides a diffractive action another of the first light flux and the second light flux passing through the third area.

34. The diffractive optical element of any one of claims 30 - 33,
wherein the first diffractive structure
comprises a plurality of ring-shaped zones whose centers are on the optical axis and
does not provide a substantial phase difference for the first light flux and the second light flux passing through the second area,
each of the plurality of ring-shaped zones of the first diffractive structure comprises a step structure including a predefined number of discontinuous portions and step portions,

the second diffractive structure

comprises a plurality of ring-shaped zones whose centers are on the optical axis and

does not to provide a substantial phase difference to one of the first light flux and the second light flux passing through the third area, and

each of the plurality of ring-shaped zones of the second diffractive structure comprises a step structure including a predefined number of discontinuous portions and a predefined number of step portions.

**35.** The diffractive optical element of claim 34 satisfying following expressions,

$$4.8 \times d \leq d1 \leq 5.2 \times d, 2 \leq M1 \leq 4$$

$$1.9 \times d \leq d2 \leq 2.1 \times d, 4 \leq M2 \leq 6$$

where $n1$ is a refractive index of the diffractive optical element for the wavelength $\lambda1$, $d1$ is a step depth of the step portion in the first diffractive structure along the optical axis, $M1$ is an integer and a number of the discontinuous portions in the first diffractive structure, $d2$ is a step depth of the step portion in the second diffractive structure along the optical axis, $M2$ is an integer and a number of the discontinuous portions in the second diffractive structure, and $d$ satisfies

$$d = \lambda1 / (n1 - 1).$$

**36.** The diffractive optical element of claim 34 satisfying following expressions,

$$4.8 \times d \leq d1 \leq 5.2 \times d, 2 \leq M1 \leq 4$$

$$0.9 \times d \leq d2 \leq 1.1 \times d, M2 = 2$$

where $n1$ is a refractive index of the diffractive optical element for the wavelength $\lambda1$, $d1$ is a step depth of the step portion in the first diffractive structure along the optical axis, $M1$ is an integer and a number of the discontinuous portions in the first diffractive structure, $d2$ is a step depth of the step portion in the second diffractive structure along the optical axis, $M2$ is an integer and a number of the discontinuous portions in the second diffractive structure, and $d$ satisfies

$$d = \lambda1 / (n1 - 1).$$

**37.** A diffractive optical element for use in an optical pickup apparatus for recording and/or reproducing information on an information recording surface of an optical disk with a protective substrate with a predefined thickness, having

a first light source emitting a first light flux with a wavelength $\lambda1$ for information recording and/or reproducing on an optical recording surface of a first optical disk having a protective substrate with a thickness $t1$;

a second light source emitting a second light flux with a wavelength $\lambda2$ ($\lambda2 > \lambda1$) for information recording and/or reproducing on an optical recording surface of a second optical disk having a protective substrate with a thickness $t2(t2 \geq t1)$;

a third light source emitting a third light flux with a wavelength $\lambda3$ ($\lambda3 > \lambda2$) for information recording and/or reproducing on an optical recording surface of a third optical disk having a protective substrate with a thickness $t3$ ($t3 > t2$);

a diffractive optical element for transmitting the first - third light fluxes and;

an objective optical system having a light converging element for converging the first - third light fluxes which have passed the diffractive optical element onto the first - third optical disks respectively,

the diffractive optical element comprising:

a first area whose center is on an optical axis and which includes the a first diffractive structure;

a second area formed in a ring-shape and arranged outside of the first area along a perpendicular direction to the optical axis, and including a second diffractive structure;

a third area formed in a ring-shape and arranged outside of the second area along a perpendicular direction to the optical axis; and

the first area forms the first - third light fluxes passing through the first area and the light converging element into converged spots on the information recording surfaces of the first - third disks respectively,

the second area

forms the first and second light fluxes among the first - third light fluxes passing through the second area and the light converging element into converged spots on the information recording surfaces of the first and second disks respectively and

does not form the third light flux among the first - third light fluxes passing through the second area and the light converging element into a converged spot on the information recording surface of the third disk,

the third area

forms one of the first light flux and the second light flux among the first - third light fluxes passing through the third area and the light converging element into a converged spot on the information recording surface of the corresponding optical disk, and

does not form the third light flux and another of one of the first light flux and the second light flux among the first - third light fluxes passing through the third area and the light converging element into converged spots on the information recording surfaces of the corresponding optical disks.

**38.** The diffractive optical element of claim 37,

wherein the diffractive optical element consists of one optical element and one optical surface of the optical element includes the second area and the third area.

**39.** The diffractive optical element of claim 37,

wherein the diffractive optical element consists of one optical element,

one optical surface of the optical element includes the second area and

an opposite optical surface includes the third area.

**40.** The diffractive optical element of any one of claims 37 - 39,

the first diffractive structure provides a diffractive action to the second light flux passing through the first area,

the second diffractive structure provides a diffractive action to the second light flux and the third light flux passing through the second area.

**41.** The diffractive optical element of any one of claims 37 - 40,

wherein the first diffractive structure

comprises a plurality of ring-shaped zones whose centers are on the optical axis and

does not provide a substantial phase difference for the first light flux and the third light flux passing through the first area,

each of the plurality of ring-shaped zones of the first diffractive structure comprises a step structure including a predefined number of discontinuous portions and step portions,

the second diffractive structure

comprises a plurality of ring-shaped zones whose centers are on the optical axis and

does not to provide a substantial phase difference for the first light flux passing through the second area, and

each of the plurality of ring-shaped zones comprises a step structure including a predefined number of discontinuous portions and a predefined number of step portions.

**42.** The diffractive optical element of claim 41 satisfying following expressions,

$$1.9 \times d \leq d1 \leq 2.1 \times d, \ 4 \leq M1 \leq 6$$

$$4.8 \times d \leq d2 \leq 5.2 \times d, \ 4 \leq M2 \leq 6$$

where n1 is a refractive index of the diffractive optical element for the wavelength $\lambda 1$, d1 is a step depth of the step portion in the first diffractive structure along the optical axis, M1 is an integer and a number of the discontinuous portions in the first diffractive structure, d2 is a step depth of the step portion in the second diffractive structure along the optical axis, M2 is an integer and a number of the discontinuous portions in the second diffractive structure, and d satisfies

$$d = \lambda1 / (n1 - 1).$$

**43.** The diffractive optical element of claim 41 satisfying following expressions,

$$1.9 \times d \leq d1 \leq 2.1 \times d, \ 4 \leq M1 \leq 6$$

$$0.9 \times d \leq d2 \leq 1.1 \times d, \ 2 \leq M2 \leq 5$$

where n1 is a refractive index of the diffractive optical element for the wavelength $\lambda1$, d1 is a step depth of the step portion in the first diffractive structure along the optical axis, M1 is an integer and a number of the discontinuous portions in the first diffractive structure, d2 is a step depth of the step portion in the second diffractive structure along the optical axis, M2 is an integer and a number of the discontinuous portions in the second diffractive structure, and d satisfies

$$d = \lambda1 / (n1 - 1).$$

**44.** The diffractive optical element of any one of claims 37 - 43,
wherein the second area is divided into at least two areas including an area 2A which is a concentric circle and whose center is on the optical axis,
a area 2B which is a concentric circle and whose center is on the optical axis, and the area 2A is arranged closer to the optical axis than the area 2B,
the second diffractive structure formed on the area 2A has a different shape from the second diffractive structure formed on the area 2B.

**45.** The diffractive optical element of any one of claims 37 - 44 satisfying following expressions,

$$370 \text{ nm} \leq \lambda1 \leq 440 \text{ nm}$$

$$620 \text{ nm} \leq \lambda2 \leq 690 \text{ nm}$$

$$750 \text{ nm} \leq \lambda3 \leq 820 \text{ nm}.$$

**46.** The diffractive optical element of any one of claims 37 - 45 satisfying following expressions,

$$0.75 \leq NA1 \leq 0.90$$

$$0.60 \leq NA2 \leq 0.70$$

$$0.43 \leq NA3 \leq 0.55$$

where NA1, NA2 and N3 are numerical apertures used for recording or producing the first, second and third disks respectively.

**47.** The diffractive optical element of any one of claims 37 - 45 satisfying following expressions,

$$0.65 \leq NA1 \leq 0.70$$

$$0.60 \leq NA2 \leq 0.63$$

$$0.43 \leq NA3 \leq 0.55$$

where NA1, NA2 and N3 are numerical apertures used for recording or producing the first, second and third disks respectively.

48. The diffractive optical element of any one of claims 37 - 45 satisfying following expressions,

$$0.64 \leq NA1 \leq 0.65$$

$$0.64 \leq NA2 \leq 0.70$$

$$0.43 \leq NA3 \leq 0.55$$

where NA1, NA2 and N3 are numerical apertures used for recording or producing the first, second and third disks respectively.

49. A diffractive optical element for use in an optical pickup apparatus for recording and/or reproducing information on an information recording surface of an optical disk having a protective substrate with a predefined thickness, having
a first light source emitting a first light flux with a wavelength $\lambda 1$ for information recording and/or reproducing on an optical recording surface of a first optical disk having a protective substrate with a thickness t1;
a second light source emitting a second light flux with a wavelength $\lambda 2$ ($\lambda 2 > \lambda 1$) for information recording and/or reproducing on an optical recording surface of a second optical disk having a protective substrate with a thickness t2($t2 \geq t1$);
a third light source emitting a. third light flux with a wavelength $\lambda 2$ ($\lambda 3 > \lambda 2$) for information recording and/or reproducing on an optical recording surface of a third optical disk having a protective substrate with a thickness t3 ($t3 > t2$);
a diffractive optical element for transmitting the first - third light fluxes and;
an objective optical system having a light converging element for converging the first - third light fluxes which have passed the diffractive optical element onto the first - third optical disks respectively,
the diffractive optical element comprising:

a first area whose center is on an optical axis;
a second area formed in a ring-shape and arranged outside of the first area along a perpendicular direction to the optical axis;
a third area formed in a ring-shape and arranged outside of the second area along a perpendicular direction to the optical axis; and
the first area, the second area and third area have different optical properties each other for the first - third light fluxes,
the third area does not form two light fluxes among the first - third light fluxes passing the third area and the light converging element into converged spots on the information recording surfaces of corresponding disks.

50. The diffractive optical element of claim 49,
wherein the optical pickup apparatus satisfies following expressions,

$$370 \text{ nm} \leq \lambda 1 \leq 440 \text{ nm}$$

$$620 \text{ nm} \leq \lambda 2 \leq 690 \text{ nm}$$

$$750 \text{ nm} \leq \lambda 3 \leq 820 \text{ nm}$$

the second area comprises a first diffractive structure having a plurality of ring-shaped zones whose centers are on the optical axis and provides a diffractive action to one of the first - third light fluxes,
each of the plurality of ring-shaped zones of the first diffractive structure comprises a step structure including a predefined number of discontinuous portions and step portions,
the third area comprises a second diffractive structure having a plurality of ring-shaped zones whose centers are on the optical axis, provides a diffractive action to one of the first - third light fluxes and has a different structure from the first diffractive structure,
each of the plurality of ring-shaped zones of the second diffractive structure comprises a step structure including a predefined number of discontinuous portions and step portions, and
the third area does not form the second light flux and the third light flux among the first - third light fluxes passing the third area and the light converging element into converged spots on the information recording surfaces of the second and the third disks.

51. The diffractive optical element of claim 49,
wherein the optical pickup apparatus satisfies following expressions,

$$370 \text{ nm} \leq \lambda 1 \leq 440 \text{ nm}$$

$$620 \text{ nm} \leq \lambda 2 \leq 690 \text{ nm}$$

$$750 \text{ nm} \leq \lambda 3 \leq 820 \text{ nm}$$

the first area comprises a first diffractive structure having a plurality of ring-shaped zones whose centers are on the optical axis and provides a diffractive action to one of the first - third light fluxes,
each of the plurality of ring-shaped zones of the first diffractive structure comprises a step structure including a predefined number of discontinuous portions and step portions,
the second area comprises a second diffractive structure having a plurality of ring-shaped zones whose centers are on the optical axis, provides a diffractive action to one of the first - third light fluxes, and has a different structure from the first diffractive structure, each of the plurality of ring-shaped zones of the second diffractive structure comprises a step structure including a predefined number of discontinuous portions and step portions, and
the third area does not form the second light flux and the third light flux among the first - third light fluxes passing the third area and the light converging element into converged spots on the information recording surfaces of the second and the third disks.

52. The diffractive optical element of any one of claims 49 - 51,
wherein the diffractive optical element consists of one optical element and one optical surface of the optical element includes the second area and the third area.

53. The diffractive optical element of any one of claims 49 - 51,
wherein the diffractive optical element consists of one optical element,
one optical surface of the optical element includes the second area and
an opposite optical surface includes the third area.

54. The diffractive optical element of any one of claims 49 - 53 satisfying following expressions,

$$0.65 \leq NA1 \leq 0.70$$

$$0.60 \leq NA2 \leq 0.63$$

$$0.43 \leq NA3 \leq 0.55$$

where NA1, NA2 and N3 are numerical apertures used for recording or producing the first, second and third disks respectively.

**55.** The diffractive optical element of any one of claims 49 - 54 satisfying following expressions,

$$0.64 \leq NA1 \leq 0.65$$

$$0.64 \leq NA2 \leq 0.70$$

$$0.43 \leq NA3 \leq 0.55$$

where NA1, NA2 and N3 are numerical apertures used for recording or producing the first, second and third disks respectively.

FIG. 1

## FIG. 2

FIG. 3 ( a )

OPTICAL AXIS

FIG. 3 ( b )

OPTICAL AXIS

FIG. 4 ( a )

15    15    15    15    15    15

OPTICAL AXIS

FIG. 4 ( b )

15    15   15      15

OPTICAL AXIS

## FIG. 5 ( a )

OPTICAL AXIS

## FIG. 5 ( b )

OPTICAL AXIS

# FIG. 6

AREA2       AREA1       AREA2

10     S1                      10

20      S2                      20

AREA3                         AREA3

# FIG. 7

AREA3 | AREA2      AREA1      AREA2 | AREA3

2B | 2A             2A | 2B

S1                         S1

S2     20       10       10       20

L

EP 1 564 731 A2

# FIG. 8

FIG. 9

# FIG. 10

FIG. 11

EP 1 564 731 A2

## FIG. 12